# EUROPÄISCHE PATENTSCHRIFT

(11) **EP 3 088 159 B1**
(45) Veröffentlichungstag und Bekanntmachung des Hinweises auf die Patenterteilung: **11.08.2021**
(21) Anmeldenummer: 15165696.4
(22) Anmeldetag: 29.04.2015
(51) Int. Cl.: B29C 48/10, B29C 48/885, B29C 48/90, B29C 55/28, B29C 48/92, B29C 48/87

(54) **KÜHLRING UND VERFAHREN ZUR AUSSENKÜHLUNG EINER SCHLAUCHFOLIE AUS THERMOPLASTISCHEM KUNSTSTOFF BEI DEREN HERSTELLUNG**
COOLING RING AND METHOD FOR EXTERNALLY COOLING A TUBULAR FILM MADE FROM THERMOPLASTIC IN THE MANUFACTURE OF SAME
ANNEAU DE REFROIDISSEMENT ET PROCÉDÉ DE REFROIDISSEMENT EXTERNE D'UNE FEUILLE TUBULAIRE EN MATIÈRE SYNTHÉTIQUE THERMOPLASTIQUE LORS DE SA PRODUCTION

(43) Veröffentlichungstag der Anmeldung: 02.11.2016
(73) Patentinhaber: Kdesign GmbH, 53639 Königswinter (DE)
(72) Erfinder: Fähling, Gerd, 53783 Eitorf (DE); Zimmermann, Richard, 53125 Bonn (DE)
(74) Vertreter: Neumann Müller Oberwalleney & Partner Patentanwälte

(56) Entgegenhaltungen:
- EP-A1- 2 801 467
- EP-A2- 1 982 819
- DE-B4-102007 027 280
- DE-C1- 4 405 464
- JP-A- S4 929 355
- JP-A- S4 934 959
- JP-A- S5 637 123
- JP-A- H08 300 439
- JP-A- S57 195 625
- US-A- 3 179 978

## Beschreibung

Die Erfindung betrifft einen Kühlring zur Außenkühlung einer Schlauchfolie aus thermoplastischem Kunststoff, wobei der Kühlring zumindest einen Kühlgasring mit zumindest einer zur Schlauchfolie hin offenen Ringdüse zum Ausblasen von Kühlgas gegen die Schlauchfolie, sowie zumindest einen Kontaktkühlring, der eine Kontaktfläche aufweist, die in unmittelbarem Kontakt zur Schlauchfolie anzuordnen ist, wobei eine sich über den Umfang des Kontaktkühlrings erstreckende Temperiereinrichtung vorgesehen ist, mittels derer die Oberflächentemperatur der Kontaktfläche einstellbar ist, aufweist.

Bei Blasfolienanlagen wird eine Schlauchfolie aus eine Folienblaskopfs eines Blasfolienextruders in Form eines plastisch verformbaren Schmelzeschlauchs extrudiert. Mithilfe eines Kühlgasrings wird die Schlauchfolie außen gekühlt und zugleich durch Einblasen von Blasluft in die Schlauchfolie zu einer Folienblase bzw. Schlauchfolie aufgeblasen und innen gekühlt. Durch das Aufblasen der Folienblase und das Abziehen derselben in Produktionsrichtung wird das Folienmaterial verstreckt, bis es schließlich in Höhe der sogenannten Einfriergrenze oder Frostgrenze erstarrt und nicht mehr plastisch verstreckbar ist. Das Folienmaterial durchläuft ferner einen Kalibrierkorb zum Kalibrieren des Außendurchmessers und der Form der Folienblase. Nach ausreichender Abkühlung wird der Folienschlauch am oberen Ende der Folienblase mithilfe einer Flachlegeeinrichtung flach gelegt und mithilfe eines Abzugs abgezogen und schließlich zu einem Coil aufgewickelt.

Zur Steigerung der Ausstoßleistung von Blasfolienextrusionsanlagen und Optimierung der mechanischen und optischen Folieneigenschaften werden heute auch sogenannte Waterquench-Anlagen eingesetzt, bei denen die Extrusion der Schlauchfolie von oben nach unten erfolgt und wo der bereits auf seinen Enddurchmesser verstreckte Schmelzeschlauch durch eine Wasserkalibrierung geführt wird. Diese Wasserkalibrierung sorgt für intensive Kühlung durch offenen Wasserkontakt und eine Fixierung des Enddurchmessers. Sehr nachteilig in das komplizierte Handling und die nicht vorhandene Breiten-Flexibilität dieser Anlagen. Soll eine andere Folienbreite produziert werden, ist ein komplizierter und zeitraubender Umbau der Wasserkalibrierung auf einen anderen Durchmesser notwendig.

Daher werden derartige Anlagen trotz der Vorteile in Leistung und Produkteigenschaften nur für Nischenprodukte eingesetzt, haben aber keinen Zugang in den Bereich der Blasfolien-Standardprodukte gefunden.

DE 10 2007 027 280 B4 offenbart eine Blasfolienextrusionsanlage mit einem Blaskopf und einem Luftkühlring, wobei zwischen Blaskopf und Luftkühlring zumindest ein Vorkühlring vorgesehen ist, durch den eine Folienblase geführt ist. Hierbei wird die Folienblase innerhalb des Vorkühlrings durch Kontaktkühlung abgekühlt, indem sich die Folienblase nach Austritt aus dem Blaskopf innen an einer Kontaktfläche des Vorkühlrings anlegt. Diese Anordnung ist in der Praxis sehr nachteilig, da sie die Zugänglichkeit der Folienblase beim Anfahren oder bei Produktumstellungen massiv einschränkt. Weiter ist es mit dieser Einrichtung schwierig oder sogar unmöglich, für verschiedene Produkte einen gleichmäßigen Kontakt des Folienhalses mit dem kontaktierenden Vorkühlring zu erreichen. Ungleichmäßiger Kontakt beeinträchtigt die Funktion erheblich und führt außerdem unweigerlich zu einer Verschlechterung der Folienquertoleranzen und der Kühlwirkung.

Der Folienhals zwischen Düsenaustritt und Kühlgasring, wo der Kontakt erfindungsgemäß stattfinden soll, wird in seinem Durchmesser und seiner Form durch die Verstreckparameter in der gesamten Schlauchbildungszone und die Schmelzefestigkeit der Rohstoffmischung im Zusammenspiel mit dem Blaseninnendruck definiert. Das Ergebnis ist ein Kräftegleichgewicht von Außen- und Innendruck entlang der Blase. Dabei ergibt sich eine Vielzahl von möglichen Halsformen.

Selbst bei gleicher Rohstoffmischung können sich durch Änderung von Foliendicke und/oder Breite positiv-trichterförmige, gerade oder negativ-trichterförmige Halsformen mit nahezu beliebigen Übergangsformen ergeben.

Die in der DE 10 2007 027 280 B4 beschriebene Erhöhung des Innendrucks der Folienblase zur Manipulation der Halsform und Sicherstellung des Kontaktes mit dem geometrisch bestimmten Vorkühlring führt dazu, dass sofort das empfindliche Kräftegleichgewicht gestört wird und ein Überfüllen der Folienblase oberhalb des Luftkühlrings über den gewünschten Durchmesser hinaus auftritt.

Aufgrund der statischen Anordnung von Kühlgasring und Vorkühlring fehlen weitere Anpassungsmöglichkeiten zur Einflussnahme auf die Verstreckverhältnisse im Bereich des kontaktierenden Vorkühlrings zwischen Düsenaustritt und Kühlgasring und damit auf die Intensität des Kontaktes. Weiter ist bei dieser Anordnung davon auszugehen, dass es bei nicht produktoptimaler Geometrie des Vorkühlrings neben Problemen durch unzureichenden Kontakt auch zu Problemen mit Stauchungen des Folienhalses in Form von vertikalen oder horizontalen Wellen kommt. Es ist daher davon auszugehen, dass bei Produktwechseln der Vorkühlring immer oder zumindest häufig getauscht werden muss, wobei die jeweilige optimale geometrische Form zur Sicherstellung eines gleichmäßigen Kontaktes nur empirisch zu ermitteln ist. Eine Einrichtung dieser Art ist daher unter Produktionsbedingungen nur sehr begrenzt verwendbar und bietet nicht die vom Kunden gewünschte Produktflexibilität.

EP 2 801 467 A1 zeigt eine Kalibriervorrichtung zum Kalibrieren eines extrudierten Folienschlauchs oberhalb der Einfriergrenze, wobei zwischen Kalibriervorrichtung und Folienschlauch ein Ringspalt gebildet ist. Die Kalibriervorrichtung weist mehrere Kalibriersegmente auf, die um eine Längsachse verteilt angeordnet sind und eine zentrale Durchführöffnung zum Hindurchführen des Folienschlauchs entlang der Längsachse bilden, wobei die Kalibriersegmente zum Einstellen des Durchmessers der Durchführöffnung verstellbar sind. Ferner weist die Kalibriervorrichtung mindestens eine Ausblasdüse je Kalibriersegment auf, durch die ein Kalibriergas der Durchführöffnung zugeführt wird, wobei die Ausblasdüsen derart gestaltet sind, dass das Kalibriergas zumindest annähernd parallel zu einer Oberfläche des Folienschlauchs dem Ringspalt zugeführt wird und der Ringspalt in einer einzigen Durchströmrichtung vom gasförmigen Medium durchströmt wird.

EP 1 982 819 B1 offenbart eine Verfahren sowie eine Vorrichtung zur Kühlung eines Folienschlauches aus thermoplastischem Kunststoff bei der Herstellung von Schlauchfolien mittels eines Blasfolienextruders mit einem Folienblaskopf, der eine Ringdüse umfasst, aus der der Folienschlauch austritt und in einer Abzugsrichtung weggeführt wird, wobei zumindest zwei Kühlgasströme von außen an den Folienschlauch in zumindest zwei von der Ringdüse beabstandeten Ausblasebenen herangeführt werden. Zumindest ein Kühlgasstrom wird entgegen der Abzugsrichtung des Folienschlauches ausgeblasen und zumindest ein Kühlgasstrom wird in Abzugsrichtung des Folienschlauches ausgeblasen, wobei die Kühlgasströme zumindest in ihrem Volumenstrom oder in ihrer Temperatur über dem Umfang sektorweise steuerbar sind.

DE 44 05 464 C1 beschreibt ein Verfahren zur Kühlung eines aus einem Folienblaskopf extrudierten Schlauches aus thermoplastischer Kunststoffschmelze, bei dem aus mindestens einem den ringförmigen Düsenspalt des Blaskopfes einfassenden Kühlring Kühlluft in Richtung auf den Schlauch ausgeblasen wird. Um die Leistung von Blasfolien-Anlagen durch Verwendung kälterer Kühlluft erhöhen zu können, wird der Schlauch mit einem primären Kühlluftstrom mit einer Temperatur unter 0 Grad Celsius angeblasen und dieser Kühlluftstrom von einem Sekundär-Luftstrom aus trockener Luft mit einer Temperatur von über 0 Grad Celsius eingehüllt.

JP S56 37123 A beschreibt eine Vorrichtung zum Extrudieren eines Folienschlauchs, bei dem der extrudierte Folienschlauch durch eine rohrförmige Kühlhülse hindurchgeführt wird. Zur Kontrolle der Expansion sind Expansionskontrollrollen vorgesehen, die eine Passage für den Folienschlauch bilden, hinter der der Folienschlauch weiter expandiert wird.

Weitere Kühlringe zur Außenkühlung eines extrudierten Folienschlauchs zeigen JP S49 34959 A und JP S49 29355 A. Diese offenbaren Waterquench-Anlagen, bei denen der bereits auf seinen Enddurchmesser verstreckte Folienschlauch stromab seiner Einfriergrenze durch eine Wasserkalibrierung gekühlt wird. Um eine hohe Kühlleistung bereitstellen zu können, ist vorgesehen, dass das aus dem Kühlring radial auf den Folienschlauch austretende Wasser verdampft.

Die Aufgabe der vorliegenden Erfindung ist es, einen Kontaktkühlring mit intensiver Kühlung prozesssicher und ohne Einschränkung der Anlagenflexibilität mit einem herkömmlichen Kühlgasring vorteilhaft zu kombinieren.

Die Aufgabe wird durch einen Kühlring zur Außenkühlung einer Schlauchfolie aus thermoplastischem Kunststoff gelöst, wobei der Kühlring zumindest einen Kühlgasring mit zumindest einer zur Schlauchfolie hin offenen Ringdüse zum Ausblasen von Kühlgas gegen die Schlauchfolie, und zumindest einen Kontaktkühlring, der eine Kontaktfläche aufweist, die in unmittelbarem Kontakt zur Schlauchfolie anzuordnen ist, wobei eine sich über den Umfang des Kontaktkühlrings erstreckende Temperiereinrichtung vorgesehen ist, mittels derer die Oberflächentemperatur der Kontaktfläche einstellbar ist, aufweist. Der zumindest eine Kühlgasring und der zumindest eine Kontaktkühlring sind hierbei zu einer gemeinsamen baulichen Einheit zusammengefasst. Ferner weist der Kühlring einen Verstellmechanismus auf, mit dem der Abstand des Kühlrings zu einem Folienblaskopf einstellbar ist.

Durch die Zusammenfassung zu einer gemeinsamen bauliche Einheit des Kontaktkühlrings und des Kühlgasrings wird sichergestellt, dass durch die geometrischen Verhältnisse der Bauteile und die Ansaugung und Fixierung der Schlauchfolie im Venturi-Effekt des Kühlgasrings immer ein definierter Zwangskontakt gegeben ist, unabhängig vom endgültigen Durchmesser der Folienblase nach der Aufweitung. Die Zusammenfassung zu einer baulichen Einheit bedeutet in diesem Zusammenhang, dass der Kühlgasring und der Kontaktkühlring direkt miteinander verbunden, also zu einer baulichen Einheit vormontiert sind, oder in ein gemeinsames Gehäuse integriert sind, so dass der Kühlgasring und der Kontaktkühlring in unmittelbarer Folge angeordnet sind.

Ein weiterer erheblicher Vorteil der Integration des Kontaktkühlrings in den Kühlgasring mit Höhenverstellmechanismus ist, dass die Zugänglichkeit der Extrusionsdüse während des Anfahrprozesses erhalten bleibt, insbesondere bei modernen Hochleistungsblasfolienanlagen mit Innenkühlung, bei denen ein Innenkühlturm mit mehreren Ausblasebenen vorgesehen ist, der durch den Kühlgasring hindurch ragt. Eine solche Zugänglichkeit ist bei der Anordnung gemäß DE 10 2007 027 280 B4 nicht gegeben.

Durch die Höhenverstellung des Kühlrings kann zudem durch Änderung der Verstreckbedingungen gezielt Einfluss auf die geometrische Form des Folienhalses zwischen Düsenaustritt und Einlauf in den Kühlring genommen werden, und somit auch auf die Berührungsintensität des integrierten Kontaktkühlrings. Hierdurch wird eine gleichmäßige und effektive Kontaktkühlung erzielt.

Der zumindest eine Kühlgasring und der zumindest eine Kontaktkühlring können hierbei insbesondere einen gemeinsamen Durchgang für die Schlauchfolie bilden. Hierdurch wird sichergestellt, dass der durch den Kühlgasring erzeugte Venturi-Effekt effektiv derart auf die Folie einwirkt, dass die Folie sicher an den Kontaktkühlring gezogen wird.

Die Temperiereinrichtung kann beides sein, eine Kühleinrichtung und/oder eine Heizeinrichtung, so dass die Temperiereinrichtung kühlen und/oder heizen kann. Grundsätzlich ist hierbei zu beachten, dass der Kontaktkühlring zwar dazu ausgelegt ist, den Folienschlauch zu kühlen. Dies kann jedoch bedeuten, dass die Temperiereinrichtung hierzu gegenüber der Umgebungstemperatur erwärmt wird, und zwar auf eine Temperatur, die unterhalb der Temperatur der Schlauchfolie liegt.

Durch die Verwendung eines Kontaktkühlrings, der mit seiner Kontaktfläche in unmittelbarem Kontakt zur Schlauchfolie steht, wird ein hoher Wärmeübergangskoeffizient zwischen dem Kontaktkühlring und der Schlauchfolie erzielt. Der Wärmekoeffizient ist höher als bei einem Kühlgasring, der nicht im Kontakt mit der Schlauchfolie steht und bei dem Kühlgas, wie zum Beispiel Luft, zur Kühlung der Schlauchfolie eingesetzt wird.

Vorteilhafterweise kann die Temperiereinrichtung derart gestaltet sein, dass die Temperatur der Kontaktfläche, die in Kontakt mit der Schlauchfolie steht, über den Umfang sektorweise variabel einstellbar ist. Hierdurch wird eine effiziente Beeinflussung des Dickenquerprofils über den Umfang der Schlauchfolie erzielt.

Die Anordnung des Kontaktkühlrings erfolgt bei allen Ausführungsformen sinnvollerweise in einem Bereich der Schlauchbildungszone, in dem der Folienhals unabhängig von Änderungen der Verstreckparameter durch Änderung der finalen Folienbreite und/oder Foliendicke sowie anderen beeinflussenden Prozessparametern in einem festen Durchmesser bzw. einer festen geometrischen Form geführt werden kann, so dass die volle Flexibilität der Anlage ohne den aufwendigen Wechsel von Bauteilen erhalten bleibt.

Die Temperiereinrichtung kann ein Kühlkanalsystem umfassen, das derart ausgebildet ist, dass ein Kühlmedium durch das Kühlkanalsystem hindurch geführt werden kann. Alternativ kann auch zumindest ein elektrisches Temperierelement vorgesehen sein.

Um bei der Ausführungsform mit einem Kühlkanalsystem ein sektorweises Variieren der Temperatur zu ermöglichen, kann das Kühlkanalsystem über den Umfang des Kontaktkühlrings sektorweise in einzelne Sektorkühlkanäle aufgeteilt sein, wobei die Temperatur der einzelnen Sektorkühlkanäle einzeln gesteuert bzw. geregelt werden kann, zum Beispiel durch Variieren der Menge und/oder der Temperatur des Kühlmediums.

Ferner können über den Umfang des Kontaktkühlrings mehrere regelbare elektrische Temperierelemente sektorweise verteilt angeordnet sein. In dem Kontaktkühlring kann für das Einstellen einer Basistemperatur ein Kühlkanalsystem wie oben beschrieben vorgesehen sein, dass vorzugsweise nicht sektorweise in Sektorkühlkanäle aufgeteilt ist. Der durch das Kühlkanalsystem erzielten Basistemperatur kann dann die Temperierung über die sektorweise angeordneten Temperierelemente überlagert werden, so dass die effektive Temperatur an der Kontaktfläche sektorweise eingestellt werden kann. Grundsätzlich ist es jedoch auch möglich, dass nur Temperierelemente vorgesehen sind, die auch für die Einstellung der Basistemperatur genutzt werden.

Vorzugsweise ist die Kontaktfläche als umlaufende Innenfläche des Kontaktkühlrings gestaltet. Der Kontaktkühlring ist demnach als Außenring gestaltet und dazu bestimmt, die Schlauchfolie außen zu umgeben. Hierbei kann die Innenfläche durchaus unterbrochen sein und in mehrere Segmente aufgeteilt sein und/oder durch separate Bauteile gebildet sein.

Durch die Wegstrecke und Verweilzeit der Schmelze im Folienhals zwischen Düsenaustritt und beabstandetem Kühlgasring findet außerdem vor dem Auftreffen auf den integrierten Kontaktkühlring eine Ankühlung der Schmelzeoberfläche statt. Dadurch wird die Anhaftungsneigung deutlich reduziert. Sinnvoll ist auch die Integration des sektortemperierten Kontaktkühlrings in einen Gegenstromkühlgasring, wie sie zum Beispiel in der EP 0 800 747 A1 beschrieben ist, oder bei einem Doppelkühlring-System mit zwei hintereinander geschalteten Kühlgasringen der Anbau oder die Integration in den oberen der beiden Kühlgasringe. Dabei wird der vorteilhafte Effekt genutzt, dass die Schmelzeoberfläche vor dem Eintritt in den Kontaktkühlring bereits durch einen aktiven Luftstrom angekühlt ist und daher noch weniger zum Anhaften und Ausbilden von Rattermarken im Kontaktkühlring neigt.

Bei der Integration des Kontaktkühlrings in einen höhenverstellbaren Kühlgasring ergibt sich darüber hinaus, dass der extrudierte Schlauchfolie beim Auftreffen auf den Kontaktkühlring bereits deutlich vorverstreckt und damit dünner ist als direkt hinter dem Düsenaustritt. Dadurch steigen die Wirksamkeit der Kontaktkühlung und die Eindringung der Kühlwirkung in die Schmelze des Folienschlauchs erheblich an. Die Vorverstreckung liegt je nach Dicke und Breite des Endprodukts in einem Bereich von Faktor 3 bis 15. Naturgemäß ist ein Folienschlauch umso besser kühlbar je dünner er im Bereich der Kühleinwirkung ist. Dies begründet sich durch die schlechte Wärmeleitfähigkeit innerhalb der Schmelze des Folienschlauchs.

Es kann vorgesehen sein, dass zumindest eine Ringdüse in Produktionslaufrichtung hinter dem Kontaktkühlring und/oder zumindest eine Ringdüse in Produktionslaufrichtung vor dem Kontaktkühlring angeordnet ist. Wie bereits oben erläutert, können mehrere Ringdüsen Bestandteil eines gemeinsamen Kühlgasrings sein.

Es kann vorgesehen sein, dass zumindest eine Ringdüse vorgesehen ist, die in Produktionslaufrichtung ausgerichtet ist und vorzugsweise in Produktionslaufrichtung hinter dem Kontaktkühlring angeordnet ist, und dass zumindest eine Ringdüse vorgesehen ist, die entgegen der Produktionslaufrichtung ausgerichtet ist und vorzugsweise in Produktionslaufrichtung vor dem Kontaktkühlring angeordnet ist.

Es können auch mehrere in Produktionslaufrichtung hintereinander angeordnete Kontaktkühlringe vorgesehen sein, die jeweils über eine individuelle voneinander unabhängige Temperaturführung verfügen. Die Kontaktkühlringe sind hierbei zu einer gemeinsamen baulichen Einheit zusammengefasst.

Als Werkstoff für den Kontaktkühlring eignen sich grundsätzlich alle Metalle, wobei eine Auswahl nach den Kriterien Wärmeleitfähigkeit, Gleitverhalten und Abriebfestigkeit erfolgt. Als Verschleißschutz und Gleitschicht sind auch Hartschichten wie Hartchrom, Chromnitrid, Titannitrid, keramische Schichten oder DLC (Diamond Like Carbon)-Schichten mit optimierten Gleiteigenschaften sinnvoll. Auch ist eine Makro-Rauigkeit der Oberfläche z.B. durch Glasperlen- oder Stahlkugelstrahlen zur Reibungsminimierung denkbar. Vorteilhaft ist auch, den Kontaktkühlring vertikal so zu teilen, dass der die Schmelze berührende innere Teil als Verschleißteil leicht tauschbar ist. Weiter kann der innere Mantel auch aus einem Nicht-Metall mit guten Gleiteigenschaften ausgeführt werden, z.B. Teflon oder teflongefüllte Materialien. Dabei nimmt man schlechtere Wärmeleiteigenschaften zugunsten der Gleiteigenschaften in Kauf. Weiter kann auch ein Teil des metallischen Kontaktkühlrings, vorzugsweise der Einlauf und/oder der Auslauf, aus einem nichtmetallischen Material mit guten Gleiteigenschaften ausgeführt werden, um Ankleben und Rattermarken der Schmelze beim Einlaufen in den Kontaktkühlring oder im Auslauf zu verhindern. Dabei sind auch Gleitführungen aus porösem metallischem oder nichtmetallischem Material denkbar, aus denen ein leichtes Gaspolster zur Kontaktminimierung ausströmt.

Grundsätzlich können ein oder mehrere Kühlgasringe vorgesehen sein. Die Kühlgasringe können eine oder mehrere Ringdüsen aufweisen, die von einer gemeinsamen Ringkammer mit Kühlgas, vorzugsweise Luft, gespeist werden. In Produktionslaufrichtung der Schlauchfolie betrachtet, können ein oder mehrere Kühlgasringe jeweils vor und/oder hinter dem Kontaktkühlring angeordnet sein. Es ist auch denkbar, dass ein Kühlgasring oder einer der Kühlgasringe derart ausgebildet ist, dass er zumindest eine Ringdüse aufweist, die vor dem Kontaktkühlring angeordnet ist, und zumindest eine Ringdüse aufweist, die hinter dem Kontaktkühlring angeordnet ist, wobei die Ringdüsen von einer gemeinsamen Kühlgasversorgung, vorzugsweise von einer gemeinsamen Ringkammer, gespeist werden.

In einer Ausführungsform sind der Kontaktkühlring und der zumindest eine Kühlgasring über einen Verstellmechanismus miteinander verbunden. Der Abstand zwischen dem Kontaktkühlring und dem zumindest einen Kühlgasring ist mittels des Verstellmechanismus einstellbar.

Dadurch kann der Anpressdruck des Kontaktkühlrings an den Folienhals der Schlauchfolie justiert werden, dessen Form in diesem Bereich weitgehend durch die Geometrie des Kühlgasrings bestimmt wird. Auch für diese Bauform ist es in einer erweiterten Ausgestaltung sinnvoll, Temperiermittel für eine am Umfang sektorweise Einstellung der Oberflächentemperatur vorzusehen. Dadurch kann das Dickenquerprofil gezielt und effektiv beeinflusst werden.

Bei einer weiteren Ausführungsform ist vorgesehen, dass der Kontaktkühlring zumindest in Umfangsrichtung in mehrere Kontaktkühlringsegmente aufgeteilt ist. Jedes einzelne Kontaktkühlringsegmente ist hierbei vorzugsweise individuell temperierbar. Die Kontaktkühlringsegmente können hierbei auf mehrere Ebenen aufgeteilt sein.

Somit kann je Kontaktkühlringsegment ein Radialverstellmechanismus vorgesehen sein, mittels dessen die einzelnen Kontaktkühlringsegmente gegenüber der Schlauchfolie radial verstellbar sind, um den Innendurchmesser und/oder den Anpressdruck des Kontaktkühlrings an der Schlauchfolie anpassen zu können.

Die Kontaktkühlringsegmente können zudem, wie bereits oben im Zusammenhang mit anderen Ausführungsbeispielen beschrieben, in Umfangsrichtung segmentweise temperierbar sein. Dadurch kann zum einen das Dickenquerprofil effektiv beeinflusst werden. Zum anderen kann dadurch aber auch bei der versetzten mehrreihigen Anordnung in mehreren Ebenen eine ungleichmäßige Kühlung im Überlappungsbereich der Kontaktkühlringsegmente kompensiert und vermieden werden.

Grundsätzlich sind auch Ausführungsformen denkbar, bei denen die einzelnen Kontaktkühlringsegmente als temperierte Rollen ausgeführt sind.

Die Aufgabe wir auch durch eine Folienblasanlage zur Herstellung einer Schlauchfolie aus thermoplastischem Kunststoff gelöst, wobei die Folienblasanlage einen Folienblaskopf mit einer Extrusionsringdüse zum Extrudieren der Schlauchfolie, und einen Kühlring wie vorangehen beschrieben aufweist, wobei der Kühlring zwischen der Extrusionsringdüse des Folienblaskopfs und einer Einfriergrenze der extrudierten Schlauchfolie angeordnet ist und mit seiner Kontaktfläche in unmittelbarem Kontakt zur Schlauchfolie angeordnet ist.

Die Aufgabe wird ferner gelöst durch ein Verfahren zur Außenkühlung einer Schlauchfolie aus thermoplastischem Kunststoff, wobei ein zwischen einer Extrusionsringdüse eines Folienblaskopfs eines Blasfolienextruders und einer Einfriergrenze der extrudierten Schlauchfolie angeordneter Kühlring, der zumindest einen Kühlgasring mit zumindest einer zur Schlauchfolie hin offenen Ringdüse zum Ausblasen von Kühlgas gegen die Schlauchfolie und der zumindest einen Kontaktkühlring mit einer Kontaktfläche in unmittelbarem Kontakt zum Folienschlauch aufweist. Die Oberflächentemperatur der Kontaktfläche wird in Abhängigkeit einer der Prozessparameter aus der Gruppe Ausstoßleistung, Dicke der Schlauchfolie hinter der Einfriergrenze und Folienbreite eingestellt.

Hierbei kann die gesamte Kontaktfläche auf eine Basistemperatur temperiert wird und in Abhängigkeit des Dickenquerprofils der Schlauchfolie die Temperatur der Kontaktfläche sektorweise abweichend von der Basistemperatur nachgeregelt werden.

Die Oberflächentemperatur der Kontaktfläche kann in Abhängigkeit von
- einer Temperatur der Schlauchfolie vor Eintritt in den Kontaktkühlring oder
- einer Temperatur der Schlauchfolie nach Austritt aus dem Kontaktkühlring oder
- einer Temperaturdifferenz zwischen der Temperatur der Schlauchfolie vor Eintritt in den Kontaktkühlring und der Temperatur der Schlauchfolie nach dem Austritt aus dem Kontaktkühlring
gesteuert werden.

Hierbei kann die gesamte Kontaktfläche auf eine Basistemperatur temperiert werden und in Abhängigkeit des Dickenquerprofils der Schlauchfolie über den Umfang die Temperatur der Kontaktfläche sektorweise abweichend von der Basistemperatur nachgeregelt werden. Diese Nachregelung kann gezielt nach einem rechnergestützten Prozessmodell erfolgen. Dabei kann auch die Einlauf- und/oder Auslauftemperatur der Folie im Kontaktkühlring oder die Differenz dieser beiden Temperaturen für einen Steuer- bzw. Regelkreis verwendet werden.

Zur Basistemperierung auf die Basistemperatur des Kontaktkühlrings und Abführung der Energie aus der Schmelze bietet sich ein Kühlkreislauf mit einem Kühlmedium an, das durch den Kontaktkühlring geführt wird. Das oben beschriebene Kühlsystem innerhalb des Kontaktkühlring ist dann Bestandteil des Kühlkreislaufs. Die Sektortemperierung der Oberfläche kann durch am Umfang separat steuerbare elektrische Temperierelemente, wie zum Beispiel Heizelemente oder Kühlelemente, realisiert werden, die der Basistemperierung durch das Kühlmedium überlagert werden und die in Abhängigkeit vom Folienquerprofil sektoriell gesteuert werden, um dieses gezielt zu manipulieren und zu optimieren. Man kann aber auch das Kühlmedium zur Kühlung gleichzeitigen Sektortemperierung einsetzen, indem man mehrere Kühlkreise, zu denen die oben beschriebenen Sektorkühlkanäle gehören, am Umfang separiert und das Kühlmedium in jedem der Kühlkreise unabhängig in Menge und/oder Temperatur steuert. Auch ist eine Kühlung und gleichzeitige Sektortemperierung durch am Umfang separierte und einzeln steuerbare elektrische Kühlelemente (z.B. Peltier-Elemente) denkbar.

Ferner kann vorgesehen sein, dass Kühlgasströme in Abhängigkeit des Dickenquerprofils der Schlauchfolie über dem Umfang sektorweise hinsichtlich des Volumenstroms und/oder der Temperatur variabel gesteuert werden.

Auch ist es denkbar, für eine maximale Wirksamkeit mehrere sektortemperierte Kontaktkühlringe auf der Außenseite der Schlauchfolie anzuordnen, wobei eine jeweilige individuelle Temperaturführung sinnvoll ist. Dabei können auch mehrere Kontaktkühlringe zu einer baulichen Einheit zusammengefasst werden, wobei aber die individuelle Temperaturführung erhalten bleibt. In einer einfachen Ausführungsform wird ein äußerer Kühlgasring mit integriertem sektortemperierten Kontaktkühlring unmittelbar auf der Extrusionsdüse angeordnet. Vorteilhafter ist aber eine beabstandete Anordnung mit einstellbarem Abstand, um Einfluss auf die Stärke des Kontaktes zwischen Schmelze und Kontaktkühlring nehmen zu können und um eine gute Zugänglichkeit zur Extrusionsdüse zu gewährleisten. In einer maximalen Ausbaustufe wird vorgesehen, den sektortemperierten Kontaktkühlring mit einer Sektorregelung des Kühlgasrings zu kombinieren, um eine maximale Einflussnahme auf das Querprofil der Folie zu erreichen.

Bevorzugte Ausführungsbeispiel erfindungsgemäßer Kühlringe werden im Folgenden anhand der Figuren näher erläutert. Hierin zeigen:
- Figur 1: eine Folienblasanlage mit einem erfindungsgemäßen Kühlring im Vertikalschnitt,
- Figur 2: einen Vertikalschnitt einer ersten Ausführungsform eines Kühlrings,
- Figur 3: einen Vertikalschnitt einer zweiten Ausführungsform eines Kühlrings,
- Figur 4: einen Vertikalschnitt einer dritten Ausführungsform eines Kühlrings,
- Figur 5: einen Vertikalschnitt einer vierten Ausführungsform eines Kühlrings,
- Figur 6: einen Teilschnitt der vierten Ausführungsform des Kühlrings gemäß Figur 5 in einer Draufsicht,
- Figur 7: einen Vertikalschnitt einer fünften Ausführungsform eines Kühlrings,
- Figur 8: einen Vertikalschnitt einer sechsten Ausführungsform eines Kühlrings,
- Figur 9: einen Vertikalschnitt einer siebten Ausführungsform eines Kühlrings, und
- Figur 10: eine Draufsicht auf den Kontaktkühlring des Kühlrings gemäß Figur 9.

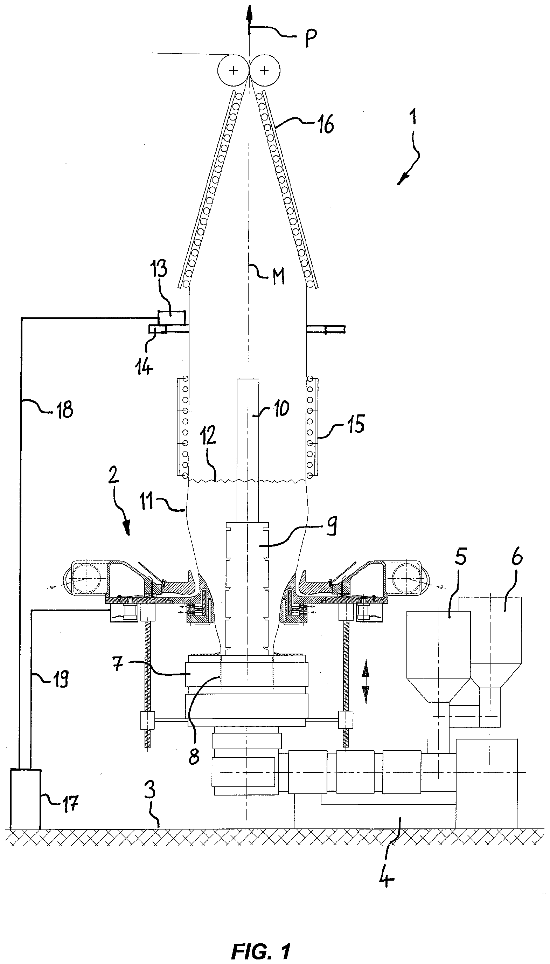

In Figur 1 ist eine vollständige Folienblasanlage 1, zur Herstellung einer Schlauchfolie 11, mit einem erfindungsgemäßen Kühlring 2 im Vertikalschnitt gezeigt. Auf einem Fundament 3 steht ein Extruder 4 für thermoplastischen Kunststoff, an dem zwei Aufgabetrichter 5, 6 zu erkennen sind. An dem Extruder 4 ist ein Folienblaskopf 7 mit senkrechter Mittelachse M angeordnet, an dem eine konzentrisch zur Mittelachse M liegende Extrusionsringdüse 8 sichtbar wird. Zentral am Folienblaskopf 7 sind eine Innenkühleinrichtung 9, über die Kühlgas in die Schlauchfolie 11 eingeleitet wird, sowie ein Gasabsaugrohr 10 angebracht. Hiermit wird ein innerer Überdruck in der Schlauchfolie 11 erzeugt, die aus der Extrusionsringdüse 8 austritt, infolge des Überdrucks sich zunächst erweitert und an einer Einfriergrenze 12 in einen Zustand übergeht, in dem eine weitere plastische Verformung des Materials der Schlauchfolie 11 nicht mehr möglich ist. Die Innenkühleinrichtung 9 kann ebenso wie der Kühlring 2 zur Kühlung des Schlauchfolienmaterials beitragen. Infolge des inneren Überdrucks, der auch zur Stabilisierung dient, und durch das Abziehen der Schlauchfolie 11 kommt es zunächst zu einer Umfangs- und Längsverstreckung des Schlauchfolienmaterials, die umso schneller unterbunden werden, je stärker das Schlauchfolienmaterial abgekühlt wird. Umfangsbereiche der Schlauchfolie 11, die eine übermäßige Materialdicke haben, werden aus diesem Grund weniger gekühlt, während Umfangsbereiche, die bereits mit einer geringeren Materialdicke austreten, stärker gekühlt werden, um ein zusätzliches Verstrecken und damit Ausdünnen des Schlauchfolienmaterials zu verhindern. Zur Erfassung der Umfangsverteilung der Schlauchfoliendicke (des Dickenquerprofils der Schlauchfolie 11) ist eine Sensoranordnung 13 vorgesehen, die auf einem Führungsring 14 über den Umfang der Schlauchfolie 11 periodisch bewegbar ist und die Umfangsdickenverteilung der Schlauchfolie 11 erfassen kann. Diese Sensoranordnung 13 liegt in Produktionslaufrichtung P hinter einem Kalibrierkorb 15, in dem die Querschnittsform der Schlauchfolie 11 stabilisiert wird, und vor einer Flachlegeanordnung 16, in der die Schlauchfolie 11 doppelwandig flachgelegt wird, um anschließend umgelenkt und auf Rollen (nicht dargestellt) aufgewickelt zu werden. Eine Regeleinheit 17 ist über eine Messleitung 18 mit der Sensoranordnung 13 zur Schlauchfoliendickenmessung verbunden und über eine Mehrzahl von Steuerleitungen 19, von denen nur eine erkennbar ist, mit Mitteln zur sektorweisen Steuerung des Kühlrings 2 verbunden. Die Umfangsdickenverteilung kann grundsätzlich auch mit nach dem Stand der Technik bekannten Messeinrichtungen erfasst werden, die in oder nach der Flachlegeanordnung 16 angeordnet sind.

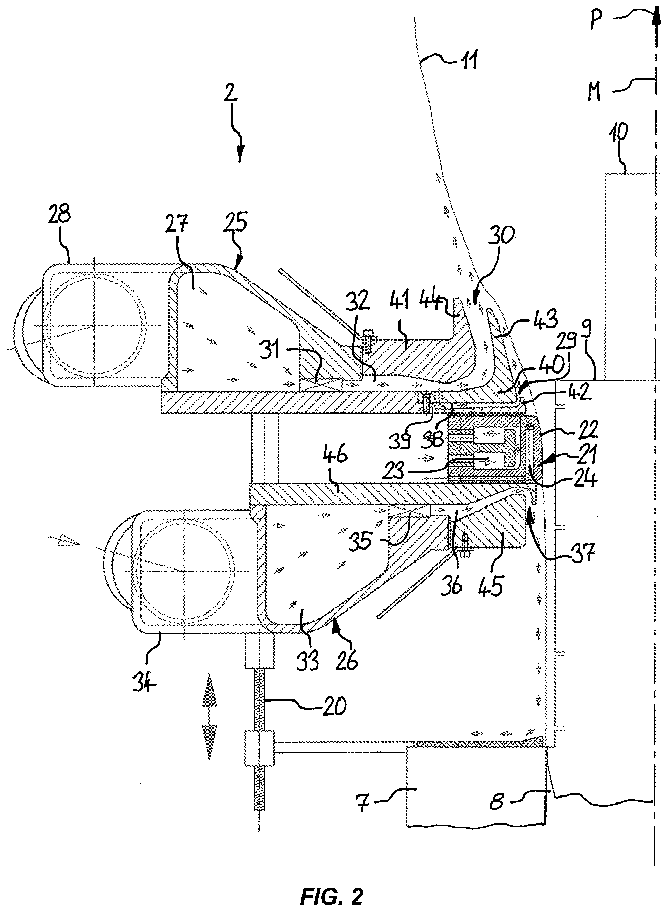

Figur 2 zeigt einen Vertikalschnitt einer ersten Ausführungsform eines Kühlrings gemäß Figur 1, wobei übereinstimmende Bauteile mit gleichen Bezugszeichen versehen sind und im Zusammenhang mit Figur 1 beschrieben sind.

Der Kühlring 2 ist über einen Verstellmechanismus 20 gegenüber dem Folienblaskopf 7 in der Höhe entlang der Mittelachse M verstellbar. Der Verstellmechanismus 53 kann, wie in Figur 2 gezeigt, als Spindel-Mutter-System oder in Form eines Linearantriebs oder in beliebiger anderer Form gestaltet sein. Der Kühlring 2 umfasst einen Kontaktkühlring 21, der um die Schlauchfolie 11 herum angeordnet ist und eine nach innen zur Mittelachse M weisende Kontaktfläche 22 umfasst. Die Schlauchfolie 11 ist in direktem Kontakt zur Kontaktfläche 22 geführt.

Zum Temperieren der Kontaktfläche 22 ist eine Temperiereinrichtung vorgesehen, welche ein Kühlkanalsystem 23 innerhalb des Kontaktkühlrings 21 aufweist. Das Kühlkanalsystem 23 dient zum Leiten eines Kühlmediums. Hierdurch kann die Kontaktfläche 22 auf eine bestimmte Temperatur eingestellt werden. Die Kontaktfläche 22 dient zur Kühlung der Schlauchfolie 11. Hierbei wird über das Kühlmedium innerhalb des Kühlkanalsystems 23 thermische Energie von der Schlauchfolie 11 abgeführt. Das Kühlmedium muss daher nicht zwingend gekühlt werden. Es ist auch möglich, dass das Kühlmedium auf eine Temperatur erwärmt wird, die höher ist als die Umgebungstemperatur und niedriger als die Temperatur der Schlauchfolie 11. Auch dann kühlt das Kühlmedium die Schlauchfolie 11.

Die Temperiereinrichtung umfasst darüber hinaus einzelne Temperierelemente 24 in Form von elektrischen Temperierelementen, zum Beispiel Heizpatronen. Die Temperierelemente 24 sind stiftförmig gestaltet und parallel zur Mittelachse M ausgerichtet und befinden sich innerhalb des Kontaktkühlrings 21. zwischen dem Kühlkanalsystem 23 und der Kontaktfläche 22. Über den Umfang um die Mittelachse M ist eine Vielzahl von Temperierelementen 24 vorgesehen.

Das Kühlkanalsystem 23 kann in Form eines geschlossenen Kühlkanalsystems in Umfangsrichtung dargestellt sein. Somit lässt sich mittels des Kühlkanalsystems 23 eine Basistemperatur des Kontaktkühlrings 21 und damit der Kontaktfläche 22 einstellen. Über die Temperierelemente 24 kann in Abhängigkeit des Dickenquerprofils der Schlauchfolie 11 die Temperatur der Kontaktfläche 22 sektorweise abweichend von der Basistemperatur nachgeregelt werden, so dass die Schlauchfolie 11 über den Umfang in unterschiedlichem Maße sektorweise temperiert wird und dadurch eine Beeinflussung des Dickenquerprofils der Schlauchfolie 11 erfolgen kann.

Es ist jedoch auch möglich, dass das Kühlkanalsystem 23 über den Umfang des Kontaktkühlrings 21 sektorweise in einzelne Sektorkühlkanäle aufgeteilt ist. Somit lässt sich bereits über das Kühlkanalsystem 23 eine sektorweise Regulierung der Temperatur erzielen. In diesem Fall kann die Temperatur weiterhin über Temperierelemente 24 überlagert werden. Alternativ können die Temperierelemente 24 jedoch auch entfallen. Denkbar ist auch, dass kein Kühlkanalsystem vorgesehen ist, sondern lediglich Temperierelemente 24.

Der Kühlring 2 umfasst ferner einen oberen Kühlgasring 25 und einen unteren Kühlgasring 26, die mit dem Kontaktkühlring 21 zu einer baulichen Einheit miteinander verbunden sind. Dies bedeutet, dass die Kühlgasringe 25, 26 unmittelbar mit dem Kontaktkühlring 21 verbunden sind. Diese können auch in einem gemeinsamen Gehäuse angeordnet sein oder gemeinsame Gehäusebauteile aufweisen. Beide Kühlgasringe 25, 26 sind, wie der Kontaktkühlring 21, um die Schlauchfolie 11 und koaxial zur Mittelachse M angeordnet. Der obere Kühlgasring 25 weist eine Ringkammer 27 zum Verteilen von Kühlgas in Umfangsrichtung auf. Die Ringkammer 27 weist mehrere über den Umfang verteilte Rohrstutzen 28 mit Anschlussmitteln zum Ansetzen von Schlauchleitungen auf, wobei die Rohrstutzen 28 etwa tangential gerichtet in die Ringkammer 27 einlaufen. Radial innen hat der obere Kühlgasring 25 zwei Ringdüsen, nämliche eine erste Ringdüse 29und eine zweite Ringdüse 30, die in Produktionslaufrichtung P hintereinander angeordnet sind und in Produktionslaufrichtung P ausgerichtet sind. Dies bedeutet, dass das Kühlgas entlang der Oberfläche der Schlauchfolie 11 in Produktionslaufrichtung P austritt, wie dies durch die Pfeile angedeutet ist.

Aufgrund des tangential gerichteten Einlaufs der Rohrstutzen 28 in die Ringkammer 27 weist das Kühlgas innerhalb der Ringkammer 27 einen Drall auf, während das Kühlgas innen aus den Ringdüsen 29, 30 gleichmäßig radial austreten soll. Daher ist zwischen der Ringkammer 27 und den Ringdüsen 29, 30 eine Strömungsgleichrichtereinheit 31 angeordnet, die aus einer Vielzahl von radial verlaufenden Stegwandungen gebildet ist, zwischen denen jeweils einzelne Strömungskanäle gebildet sind. Die Strömungsgleichrichtereinheit 31 geht in einen Kühlgaskanal 32 über, der in Richtung zur zweiten Ringdüsen 30 führt, wobei von dem Kühlgaskanal 32 eine Abzweigleitung 38 in Richtung zur ersten Ringdüse 29 abzweigt.

Die Ringdüsen 29, 30 sind durch Ringelemente, nämlich ein erstes Ringelement 39, ein zweites Ringelement 40 und ein drittes Ringelement 41 gebildet. Die Ringelemente 39, 40, 41 weisen jeweils umlaufende sich in axialer Richtung erstreckende Lippen 42, 43, 44 auf. Die Lippen 42, 43 des ersten Ringelements 39 und des zweiten Ringelements 40 bilden zusammen die erste Ringdüse 29. Die Lippen 43, 44 des zweiten Ringelements 40 und des dritten Ringelements 41 bilden die zweite Ringdüse 30. Die Ringelemente 39, 40, 41 sind nicht mit der Schlauchfolie 11 in Kontakt. Durch den Venturi-Effekt des Kühlgases zwischen dem oberen Kühlgasring 25 und der Schlauchfolie 11 wird die Schlauchfolie 11 an den oberen Kühlgasring 25 herangezogen, ohne diesen zu berühren. Der Venturi-Effekt dient dazu, die Schlauchfolie 11 kontrolliert zu führen und zu gewährleisten, dass die Schlauchfolie 11 in gleichmäßigem Kontakt zum Kontaktkühlring 21 geführt wird.

Der untere Kühlgasring 26 ist ähnlich aufgebaut wie der obere Kühlgasring 25 und weist demnach eine Ringkammer 33 mit Rohrstutzen 34 auf. Ausgehend von der Ringkammer 33 wird das Kühlgas über eine Strömungsgleichrichtereinheit 35 zu einem Kühlgaskanal 36 geführt, der in eine Ringdüse 37 mündet. Der untere Kühlgasring 26 weist eine Ringdüse 37 auf, die entgegen der Abzugsrichtung P gerichtet ist, so dass das Kühlgas entgegen der Produktionslaufrichtung P nach unten ausströmt, wie dies durch die Pfeile angedeutet ist. Selbstverständlich können auch mehrere Ringdüsen vorgesehen sein, die entgegen der Abzugsrichtung ausgerichtet sind. Die Ringdüse 37 des unteren Kühlgasrings 26 ist von einem vierten Ringelemente 45 und einem fünften Ringelement 46 gebildet, wie dies bereits im Zusammenhang mit dem oberen Kühlgasring 25 beschrieben wurde.

Alternativ zu der gezeigten Ausführungsform ist es auch denkbar, dass zusätzlich zu den gezeigten Kühlgasringen 25, 26 des Kühlrings 2 zusätzliche, nicht zum Kühlring 2 gehörende Kühlgasringe vorgesehen sind. Darüber hinaus kann auch der Kühlring 2 selbst weitere Kühlgasringe aufweisen. Ferner ist es denkbar, dass lediglich ein Kühlgasring vorgesehen ist, der entweder, in Produktionslaufrichtung P betrachtet, vor oder hinter dem Kontaktkühlring 21 angeordnet ist. Weiterhin ist denkbar, dass von der gezeigten Ausführungsform abweichende Anzahlen von Ringdüsen vorgesehen sind. Darüber hinaus können die Volumenströme und/oder die Temperatur des Kühlgases einzelner oder aller Ringdüsen sektorweise einstellbar sein.

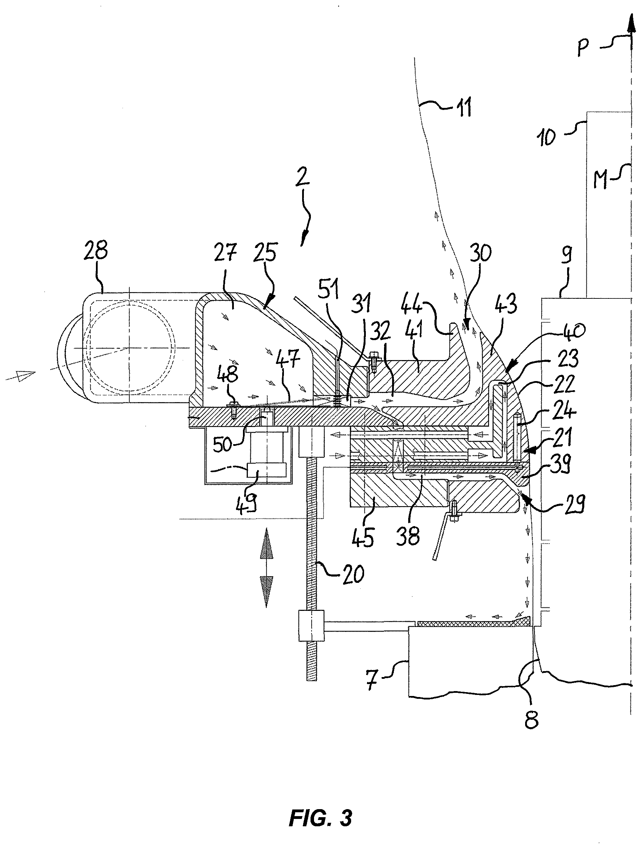

Figur 3 zeigt eine zweite Ausführungsform eines Kühlrings 2, wobei übereinstimmende Bauteile mit denselben Bezugszeichen versehen sind und im Zusammenhang mit Figur 2 beschrieben sind.

Im Unterschied zu der ersten Ausführungsform eines Kühlrings gemäß Figur 2 weist die zweite Ausführungsform nur einen Kühlgasring 25 auf. In diesen ist der Kontaktkühlring 21 baulich integriert.

Der Kühlgasring weist eine erste Ringdüse 29 und eine zweite Ringdüse 30 auf, wobei die erste Ringdüse 29 in Produktionslaufrichtung P betrachtet vor der zweiten Ringdüse 30 angeordnet ist und vor dem Kontaktkühlring 21. Die zweite Ringdüse 30 ist, bezogen auf die Produktionslaufrichtung P, hinter der ersten Ringdüse 29 und hinter dem Kontaktkühlring 21 angeordnet. Die erste Ringdüse 29 ist entgegen der Produktionslaufrichtung P ausgerichtet, so dass Kühlgas entgegen der Produktionslaufrichtung P ausströmt. Die zweite Ringdüse 30 ist in Produktionslaufrichtung ausgerichtet, so dass Kühlgas in Produktionslaufrichtung P ausströmt.

Die erste Ringdüse 29 ist durch das erste Ringelemente 39 und das vierte Ringelement 45 gebildet. Die zweite Ringdüse 30 ist durch das zweite Ringelement 40 und das dritte Ringelement 41 gebildet. Hierbei ist der Kontaktkühlring 21 mit seinem Kühlkanalsystem 23 und den Temperierelementen 24 in dem zweiten Ringelement 40, welches in Produktionslaufrichtung P vor dem dritten Ringelement 41 angeordnet ist, integriert. Das zweite Ringelement 40 bildet gleichzeitig einen Teil der Kontaktfläche 22 des Kontaktkühlrings 21. Direkt hinter der Kontaktfläche 22 mündet die zweite Ringdüse 30, so dass unmittelbar im Anschluss an die Kontaktfläche 22 Kühlgas auf die Schlauchfolie 11 gerichtet ist.

Von den beiden Ringelementen 39, 45, welche die erste Ringdüse 29 bilden, ist das erste Ringelement 39, welches in Produktionslaufrichtung hinter dem vierten Ringelement 45 angeordnet ist, in direktem Kontakt zur Schlauchfolie 11 angeordnet und bildet einen weiteren Teil der Kontaktfläche 22. Das erste Ringelement 39 ist unmittelbar mit dem zweiten Ringelement 40 verbunden, welches einen Teil der Kontaktfläche 22 bildet, so dass es zusammen mit diesem über die Temperiereinrichtung temperiert wird.

Der Volumenstrom des Kühlgases ist sektorweise einstellbar. Hierzu sind radial außen im Bereich der Strömungsgleichrichtereinheit 31 einzelne über den Umfang verteilte Flachfedern 47 vorgesehen, die mit Schrauben 48 an ihren radial äußeren Enden in der Ringkammer 27 befestigt sind. Jede der Flachfedern 47 überdeckt in Umfangsrichtung Eintrittsseiten einer Mehrzahl oder Gruppe von Strömungskanälen der Strömungsgleichrichtereinheit 31. Unterhalb jeder Flachfeder 47 sitzt ein Linearaktuator 49 mit einem axial bewegbaren Stellkolben 50, der auf die Flachfeder 47 derart einwirkt, dass die Flachfeder in jede beliebige Stellung ausgelenkt werden kann. Hierdurch kann jeweils der Querschnitt der Strömungskanäle an der Eintrittsseite der Strömungsgleichrichtereinheit 31 stufenlos verstellt werden, wodurch jeweils der Durchfluss von Kühlgas in der Gruppe von Strömungskanälen der Strömungsgleichrichtereinheit 31 gemeinsam beeinflusst werden kann. Hierdurch wird eine sektorweise Einstellung des Volumenstroms an Kühlgas ermöglicht. Grundsätzlich ist auch denkbar, dass für jeden Strömungskanal eine separate Flachfeder oder ein anderes Sperrelement, das den Querschnitt des jeweiligen Strömungskanals 52 ändert, vorgesehen ist, so dass der Volumenstrom in jedem einzelnen der Strömungskanäle 52 einstellbar ist.

Darüber hinaus sind im Bereich der Strömungsgleichrichtereinheit 31 mehrere über den Umfang verteilte Temperierelemente 51 vorgesehen, die jeweils in einen der Strömungskanäle 52 hineinragen oder über den Umfang verteilt angeordnete Sektorabschnitte der Strömungsgleichrichtereinheit 31 temperieren. Somit lässt sich sektorweise die Temperatur des Kühlgases über den Umfang variieren. Es ist auch denkbar, dass nur Verstellmittel für den Volumenstrom oder nur Temperierelemente vorgesehen sind. Diese Einstellung des Volumenstroms und/oder der Temperatur des Kühlgases kann ebenfalls in die voran genannte und beschriebene Ausführungsform integriert werden.

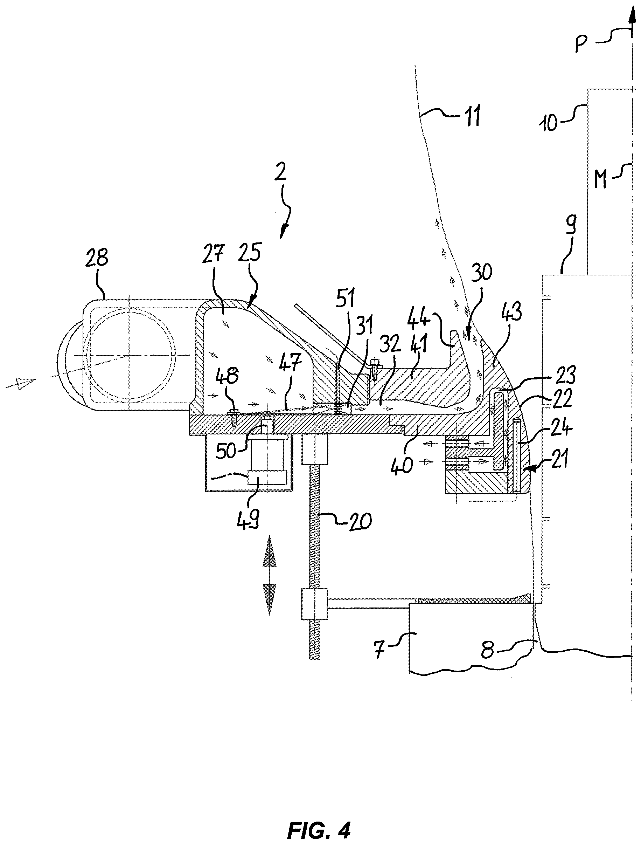

Figur 4 zeigt eine dritte Ausführungsform eines erfindungsgemäßen Kühlrings, welche ähnlich aufgebaut ist, wie die zweite Ausführungsform gemäß Figur 3. Übereinstimmende Bauteile sind mit denselben Bezugszeichen versehen und im Zusammenhang mit den Figuren 2 und 3 beschrieben.

Im Unterschied zum Kühlring der zweiten Ausführungsform weist der Kühlring 2 gemäß der dritten Ausführungsform lediglich eine Ringdüse 30 auf, nämlich diejenige Ringdüse, die in Produktionslaufrichtung P ausgerichtet ist.

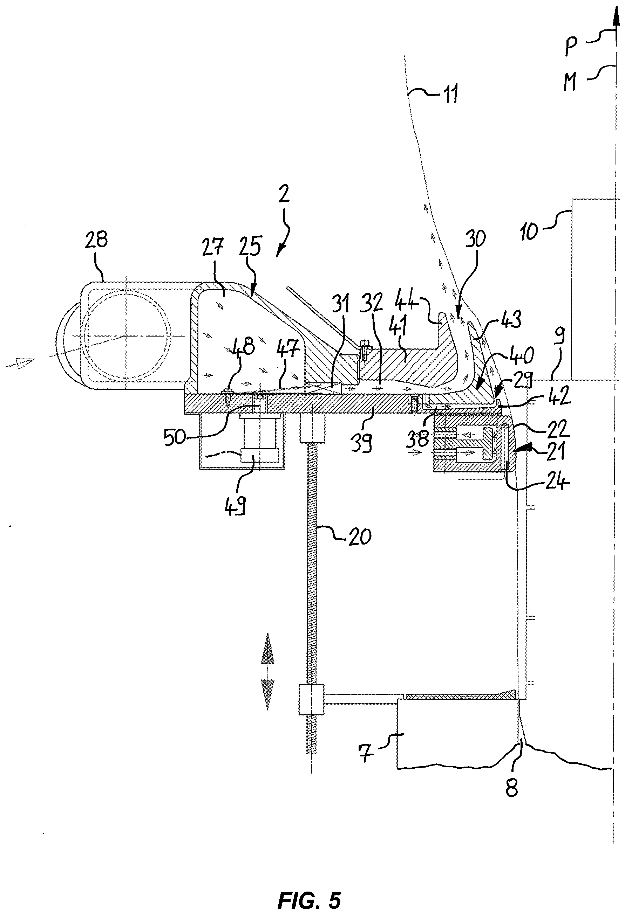

Figur 5 zeigt eine vierte Ausführungsform eines erfindungsgemäßen Kühlrings, welche ähnlich aufgebaut ist, wie die erste Ausführungsform gemäß Figur 2. Übereinstimmende Bauteile sind mit denselben Bezugszeichen versehen und im Zusammenhang mit Figur 2 beschrieben.

Im Unterschied zum Kühlring der ersten Ausführungsform weist der Kühlring 2 gemäß der vierten Ausführungsform lediglich einen Kühlgasring auf, nämlich den oberen Kühlgasring 25. Darüber hinaus ist der Volumenstrom des Kühlgases sektorweise einstellbar. Grundsätzlich ist auch eine sektorweise Einstellung der Temperatur denkbar. Hierzu sind analog zur zweiten Ausführungsform gemäß Figur 3 und zur dritten Ausführungsform gemäß Figur 4 radial außen im Bereich der Strömungsgleichrichtereinheit 31 einzelne über den Umfang verteilte Flachfedern 47 vorgesehen, die mit Schrauben 48 an ihren radial äußeren Enden in der Ringkammer 27 befestigt sind. Die Einzelheiten sind im Zusammenhang mit der zweiten Ausführungsform beschrieben.

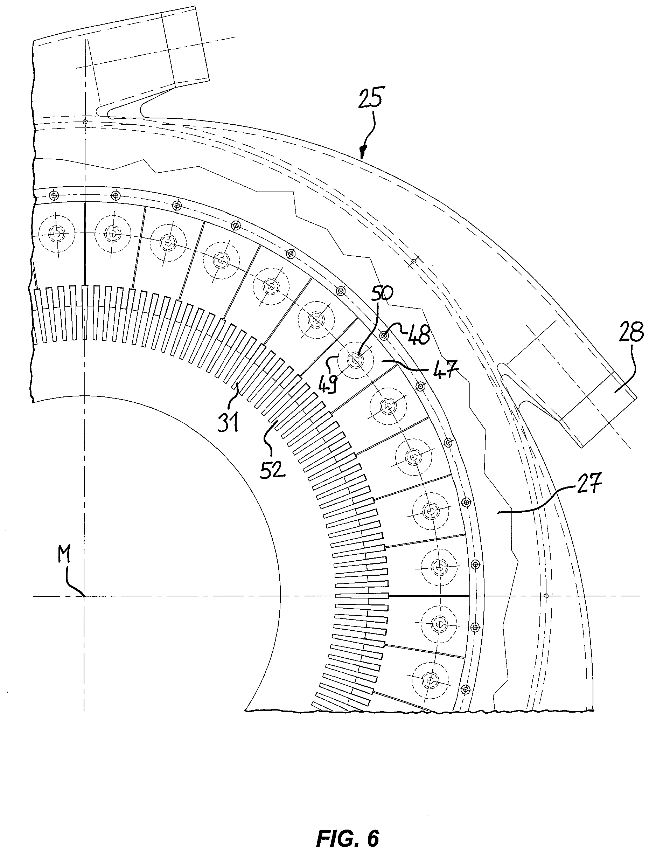

Figur 6 zeigt einen Teilschnitt der vierten Ausführungsform des Kühlrings in einer Draufsicht. Es ist zu erkennen, dass jede der Flachfedern 47 in Umfangsrichtung Eintrittsseiten einer Mehrzahl oder einer Gruppe von Strömungskanälen 52 der Strömungsgleichrichtereinheit 31 überdeckt. Die Flachfedern 47 sind hierbei an einer der Strömungsgleichrichtereinheit 31 zugewandten Seite kammartig gestaltet und greifen in die Strömungskanälen 52 ein. Der Durchfluss von Kühlgas kann in der Gruppe von Strömungskanälen 52 der Strömungsgleichrichtereinheit 31 gemeinsam beeinflusst werden. Hierdurch wird eine über den Umfang sektorweise Einstellung des Volumenstroms an Kühlgas ermöglicht. Anstelle der Flachfedern sind selbstverständlich auch andere Absperrelemente möglich, wie z.B. Schieberelemente.

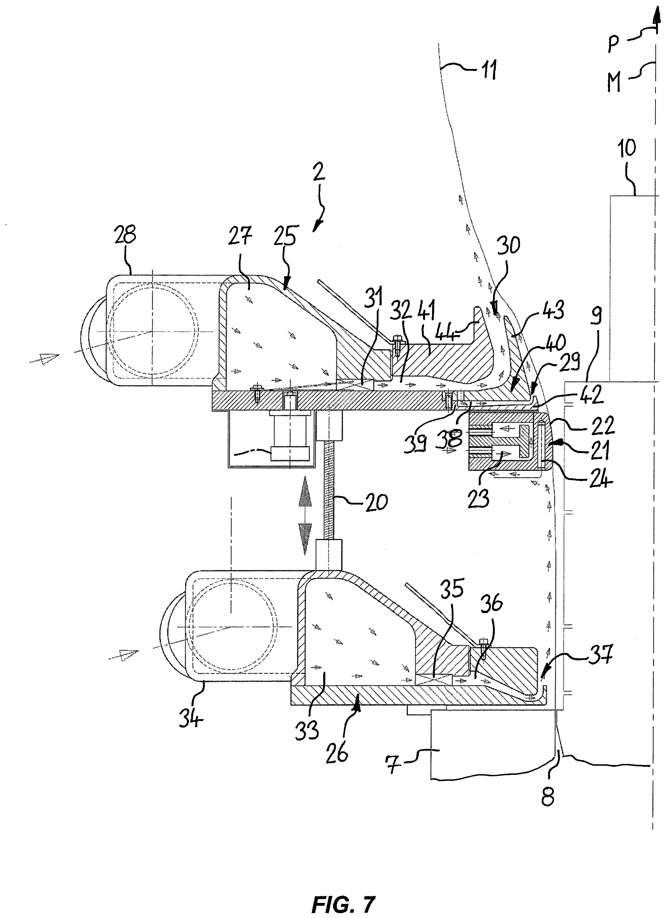

Figur 7 zeigt eine fünfte Ausführungsform eines erfindungsgemäßen Kühlrings, welche ähnlich aufgebaut ist, wie die erste Ausführungsform gemäß Figur 2 und die vierte Ausführungsform gemäß Figur 5.

Die fünfte Ausführungsform umfasst zwei Kühlgasringe, nämlich einen oberen Kühlgasring 25 und einen unteren Kühlgasring 26. Im Gegensatz zur ersten Ausführungsform sind die beiden Kühlgasringe 25, 26 nicht zu einer baulichen Einheit miteinander verbunden. Vielmehr sind die beiden Kühlgasringe 25, 26 als separate Einheiten ausgebildet und über einen Verstellmechanismus 20 miteinander derart verbunden, dass der axiale Abstand zwischen den beiden Kühlgasringen 25, 26 verstellt werden kann. Der Verstellmechanismus 20 kann, wie in Figur 7 gezeigt, als Spindel-Mutter-System oder in Form eines Linearantriebs oder in beliebiger anderer Form gestaltet sein.

Darüber hinaus ist die Ringdüse des unteren Kühlgasrings 26 nicht entgegen die Produktionsrichtung sondern in Produktionsrichtung ausgerichtet.

Der obere Kühlgasring 25 ist identisch zum Kühlgasring der vierten Ausführungsform gemäß Figur 5 gestaltet, weist demnach Flachfedern 47 zur Volumenstrombeeinflussung auf. Zusätzlich oder alternativ könnte der obere Kühlgasring auch Temperierelemente aufweisen, wie sie im Zusammenhang mit der zweiten Ausführungsform gemäß Figur 3 beschrieben sind. Der untere Kühlgasring 26 könnte ebenfalls mit Flachfedern und/oder Temperierelementen ausgerüstet sein.

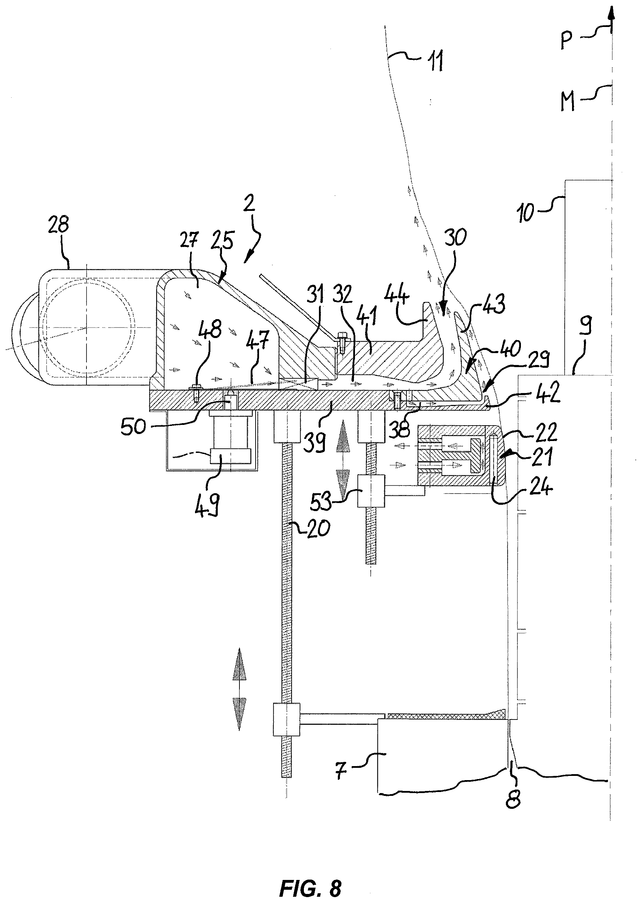

Figur 8 zeigt eine sechste Ausführungsform eines erfindungsgemäßen Kühlrings, welcher ähnlich aufgebaut ist, wie die vierte Ausführungsform gemäß Figur 5. Übereinstimmende Bauteile sind mit denselben Bezugszeichen versehen und im Zusammenhang mit Figur 5 beschrieben.

Im Unterschied zur vierten Ausführungsform ist der Kontaktkühlring 21 nicht starr mit dem Kühlgasring 25 verbunden, sondern über einen Verstellmechanismus 53 verstellbar mit diesem verbunden. Somit kann der axiale Abstand in Richtung der Mittelachse M zwischen dem Kontaktkühlring 21 und dem Kühlgasring 25 eingestellt werden. Der Verstellmechanismus 53 kann, wie in Figur 8 gezeigt, als Spindel-Mutter-System oder in Form eines Linearantriebs oder in beliebiger anderer Form gestaltet sein.

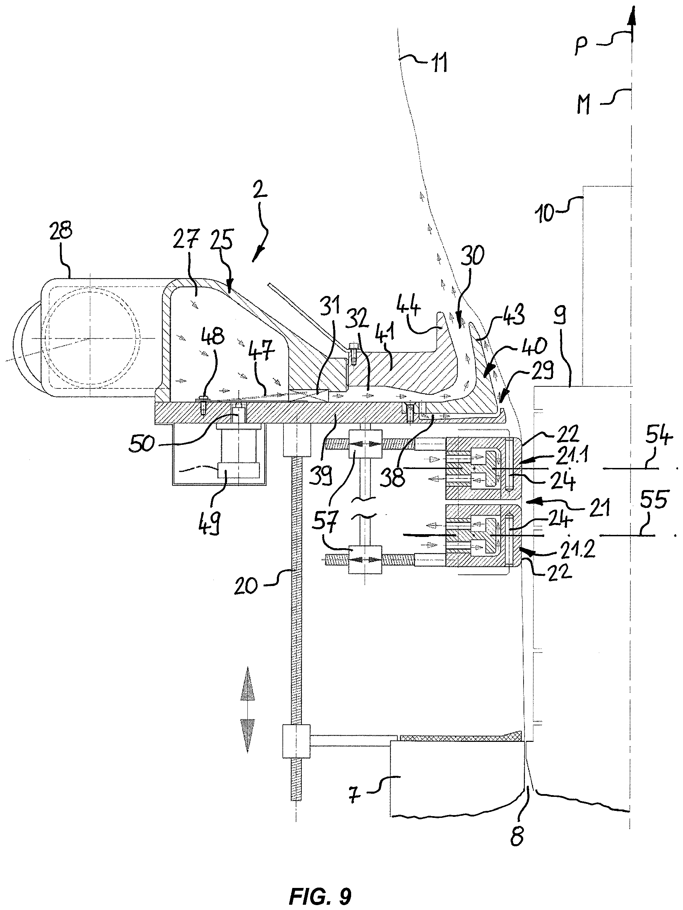

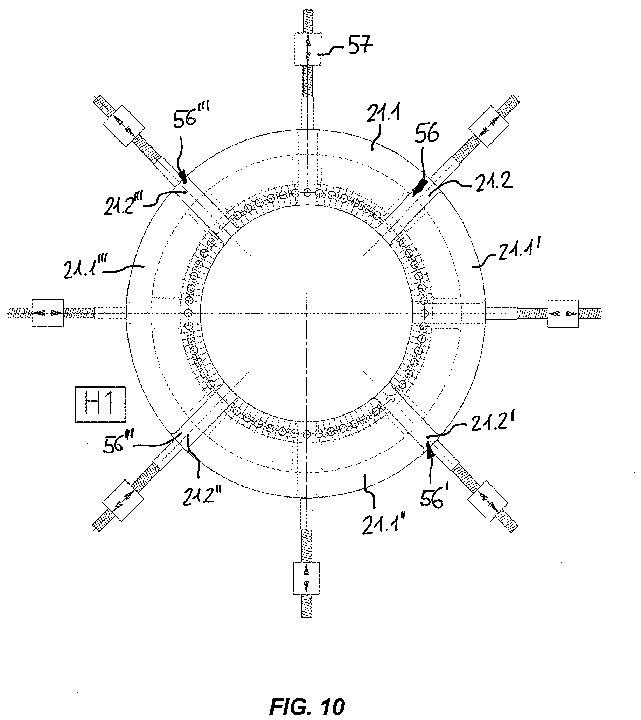

Die Figuren 9 und 10 zeigen eine siebte Ausführungsform eines erfindungsgemäßen Kühlrings, welcher ähnlich aufgebaut ist, wie die sechste Ausführungsform gemäß Figur 8. Übereinstimmende Bauteile sind mit denselben Bezugszeichen versehen und im Zusammenhang mit Figur 8 beschrieben.

Im Unterschied zur sechsten Ausführungsform ist der Kontaktkühlring 21 in mehrere Kontaktkühlringsegmente 21.1, 21.2 aufgeteilt. Jedes einzelne Kontaktkühlringsegmente 21.1, 21.2 ist hierbei vorzugsweise individuell temperierbar. Die Kontaktkühlringsegmente 21.1, 21.2 sind auf zwei Ebenen, nämlich eine obere Ebene 54 und eine untere Ebene 55, aufgeteilt und je Ebene 54, 55 über den Umfang verteilt angeordnet. In der gezeigten Ausführungsform sind je Ebene 54, 55 vier Kontaktkühlringsegmente 21.1, 21.2 über den Umfang verteilt angeordnet. In der Draufsicht gemäß Figur 10 ist zu erkennen, dass über den Umfang unmittelbar benachbarte Kontaktkühlringsegmente 21.1, 21.2 einen Spalt 56 zwischen sich einschließen. Die Kontaktkühlringsegmente 21.1, 21.2 der verschiedenen Ebenen 54, 55 sind zudem derart zueinander angeordnet, dass die Kontaktkühlringsegmente 21.1, 21.2 der einen Ebene 54, 55 die Spalte zwischen den Kontaktkühlringsegmente 21.2, 21.1 der anderen Ebene 55, 54 überdecken. Somit ist gewährleistet, dass auch im Bereich der Spalte 56 eine Kontaktkühlung der Schlauchfolie 11 stattfindet.

Jedes der Kontaktkühlringsegmente 21.1, 21.2 ist mit einem Radialverstellmechanismus 57 radial gegenüber der Schlauchfolie 11 bzw. der Mittelachse M verstellbar, so dass der Kontaktkühlring 21 an unterschiedliche Durchmesser der Schlauchfolie 11 angepasst werden kann.

Jedes der Kontaktkühlringsegmente 21.1, 21.2 kann zudem in Umfangsrichtung sektorweise temperiert sein, wie dies im Zusammenhang mit den vorherigen Ausführungsformen beschrieben wurde. In der siebten Ausführungsform sind hierzu mehrere Heizpatronen 24 vorgesehen. Ferner ist auch denkbar, dass das Kühlkanalsystem 23 in Umfangsrichtung jedes einzelnen Kontaktkühlringsegments 21.1, 21.2 sektorweise in einzelne Sektorkühlkanäle aufgeteilt ist.

Neben der radialen Verstellbarkeit der einzelnen Kontaktkühlringsegmente 21.1, 21.2 über Radialverstellmechanismen 57 kann auch vorgesehen sein, dass die Kontaktkühlringsegmente 21.1, 21.2 über (hier nicht gezeigte) Verstellmechanismen gegenüber dem Kühlgasring 25 axial in Produktionsrichtung einstellbar sind. Ferner kann vorgesehen sein, dass die Kontaktkühlringsegmente 21.1, 21.2 der einen Ebene 54, 55 gegenüber den Kontaktkühlringsegmente 21.2, 21.1 der jeweils anderen Ebene 55, 54 axial in Produktionsrichtung verstellbar sind.

### Bezugszeichenliste

- 1: Folienblasanlage
- 2: Kühlring
- 3: Fundament
- 4: Extruder
- 5: Aufgabetrichter
- 6: Aufgabetrichter
- 7: Folienblaskopf
- 8: Extrusionsringdüse
- 9: Innenkühleinrichtung
- 10: Gasabsaugrohr
- 11: Schlauchfolie
- 12: Einfriergrenze
- 13: Sensoranordnung
- 14: Führungsring
- 15: Kalibrierkorb
- 16: Flachlegeanordnung
- 17: Regeleinheit
- 18: Messleitung
- 19: Steuerleitung
- 20: Verstellmechanismus
- 21: Kontaktkühlring / Kontaktkühlringsegment
- 22: Kontaktfläche
- 23: Kühlkanalsystem
- 24: Temperierelement / Heizpatrone
- 25: oberer Kühlgasring
- 26: unterer Kühlgasring
- 27: Ringkammer
- 28: Rohrstutzen
- 29: erste Ringdüse
- 30: zweite Ringdüse
- 31: Strömungsgleichrichtereinheit
- 32: Kühlgaskanal
- 33: Ringkammer
- 34: Rohrstutzen
- 35: Strömungsgleichrichtereinheit
- 36: Kühlgaskanal
- 37: Ringdüse
- 38: Abzweigleitung
- 39: erstes Ringelement
- 40: zweites Ringelement
- 41: drittes Ringelement
- 42: Lippe
- 43: Lippe
- 44: Lippe
- 45: viertes Ringelement
- 46: fünftes Ringelement
- 47: Flachfeder
- 48: Schraube
- 49: Linearaktuator
- 50: Stellkolben
- 51: Temperierelement
- 52: Strömungskanal
- 53: Verstellmechanismus
- 54: obere Ebene
- 55: untere Ebene
- 56: Spalt
- 57: Radialverstellmechanismus
- M: Mittelachse
- P: Produktionslaufrichtung

## Patentansprüche

1. Kühlring (2) zur Außenkühlung einer Schlauchfolie (11) aus thermoplastischem Kunststoff, wobei der Kühlring (2) folgendes aufweist:
zumindest einen Kühlgasring (25, 26) mit zumindest einer zur Schlauchfolie (11) hin offenen Ringdüse (29, 30, 37) zum Ausblasen von Kühlgas gegen die Schlauchfolie (11), und
zumindest einen Kontaktkühlring (21), der eine Kontaktfläche (22) aufweist, die in unmittelbarem Kontakt zur Schlauchfolie (11) anzuordnen ist, wobei eine sich über den Umfang des Kontaktkühlrings (21) erstreckende Temperiereinrichtung (23, 24) vorgesehen ist, mittels derer die Oberflächentemperatur der Kontaktfläche (22) einstellbar ist,
**dadurch gekennzeichnet,**
**dass** der zumindest eine Kühlgasring (25, 26) und der zumindest eine Kontaktkühlring (21) zu einer gemeinsamen baulichen Einheit zusammengefasst sind und
**dass** der Kühlring einen Verstellmechanismus (20) aufweist, mit dem der Abstand des Kühlrings (2) zu einem Folienblaskopf (7) einstellbar ist.

2. Kühlring nach Anspruch 1,
**dadurch gekennzeichnet,**
**dass** der zumindest eine Kühlgasring (25, 26) und der zumindest eine Kontaktkühlring (21) in einem gemeinsamen Gehäuse angeordnet sind.

3. Kühlring nach einem der vorangehenden Ansprüche,
**dadurch gekennzeichnet,**
**dass** die zumindest eine Ringdüse (30) durch Lippen (43, 44) zweier Ringelemente (40, 41) gebildet ist und
**dass** der Kontaktkühlring in eines der beiden Ringelemente (40) integriert ist.

4. Kühlring nach einem der vorangehenden Ansprüche,
**dadurch gekennzeichnet,**
**dass** die sich über den Umfang des Kontaktkühlrings (21) erstreckende Temperiereinrichtung (23, 24) derart gestaltet ist, dass die Oberflächentemperatur der Kontaktfläche (22) über ihren Umfang sektorweise einstellbar ist.

5. Kühlring nach einem der vorangehenden Ansprüche,
**dadurch gekennzeichnet,**
**dass** die Temperiereinrichtung ein Kühlkanalsystem (23) umfasst, das derart ausgebildet ist, dass ein Kühlmedium durch das Kühlkanalsystem (23) hindurch geführt werden kann.

6. Kühlring nach Anspruch 5,
**dadurch gekennzeichnet,**
**dass** das Kühlkanalsystem (23) über den Umfang des Kontaktkühlrings (21) sektorweise in einzelne Sektorkühlkanäle aufgeteilt ist.

7. Kühlring nach einem der vorangehenden Ansprüche,
**dadurch gekennzeichnet,**
**dass** über den Umfang des Kontaktkühlrings (21) mehrere regelbare elektrische Temperierelemente (24) sektorweise verteilt angeordnet sind.

8. Kühlring nach einem der vorangehenden Ansprüche,
**dadurch gekennzeichnet,**
**dass** die Kontaktfläche (22) als umlaufende Innenfläche des Kontaktkühlrings (21) gestaltet ist und der Kontaktkühlring (21) dazu bestimmt ist, die Schlauchfolie (11) zu umschließen.

9. Kühlring nach einem der vorangehenden Ansprüche,
**dadurch gekennzeichnet,**
**dass** zumindest eine Ringdüse (29, 30) in Produktionslaufrichtung (P) hinter dem Kontaktkühlring (21) und/oder zumindest eine Ringdüse (29, 37) in Produktionslaufrichtung (P) vor dem Kontaktkühlring (21) angeordnet ist.

10. Kühlring nach einem der vorangehenden Ansprüche,
**dadurch gekennzeichnet,**
**dass** zumindest eine Ringdüse (29, 30) vorgesehen ist, die in Produktionslaufrichtung (P) ausgerichtet ist und vorzugsweise in Produktionslaufrichtung (P) hinter dem Kontaktkühlring (21) angeordnet ist, und
**dass** zumindest eine Ringdüse (29, 37) vorgesehen ist, die entgegen der Produktionslaufrichtung ausgerichtet ist und vorzugsweise in Produktionslaufrichtung (P) vor dem Kontaktkühlring (21) angeordnet ist.

11. Kühlring nach einem der vorangehenden Ansprüche,
**dadurch gekennzeichnet,**
**dass** sämtliche Ringdüsen (29, 30) eines Kühlgasrings (25) von einer gemeinsamen Ringkammer (27) zur Verteilung von Kühlgas gespeist sind.

12. Kühlring nach einem der vorangehenden Ansprüche,
**dadurch gekennzeichnet,**
**dass** zumindest einer der Kühlgasringe (25) Mittel (47, 51) aufweist, mit denen der Volumenstrom und/oder die Temperatur des Kühlgases über dem Umfang sektorweise variabel steuerbar sind.

13. Kühlring nach einem der vorangehenden Ansprüche,
**dadurch gekennzeichnet,**
**dass** mehrere Kontaktkühlringe (21) vorgesehen sind, deren Temperiereinrichtungen individuell und unabhängig voneinander steuerbar sind.

14. Kühlring nach einem der vorangehenden Ansprüche,
**dadurch gekennzeichnet,**
**dass** der Kontaktkühlring (21) und der zumindest eine Kühlgasring (25) über einen Verstellmechanismus (53) miteinander verbunden sind und der Abstand zwischen dem Kontaktkühlring (21) und dem zumindest einen Kühlgasring (25) mittels des Verstellmechanismus (53) einstellbar ist.

15. Kühlring nach einem der vorangehenden Ansprüche,
**dadurch gekennzeichnet,**
**dass** der Kontaktkühlring (21) zumindest in Umfangsrichtung in mehrere Kontaktkühlringsegmente (21.1, 21.2) aufgeteilt ist, die insbesondere auf mehreren Ebenen (54, 55) angeordnet sind.

16. Kühlring nach Anspruch 15,
**dadurch gekennzeichnet,**
**dass** die Kontaktkühlringsegmente (21.1, 21.2) jeweils mittels eines Radialverstellmechanismus (57) gegenüber der Schlauchfolie (11) radial verstellbar sind.

17. Kühlring nach einem der Ansprüche 15 oder 16,
**dadurch gekennzeichnet,**
**dass** die Kontaktkühlringsegmente (21.1, 21.2) jeweils in Umfangsrichtung sektorweise temperierbar sind.

18. Folienblasanlage zur Herstellung einer Schlauchfolie (11) aus thermoplastischem Kunststoff umfassend:
einen Folienblaskopf (7) mit einer Extrusionsringdüse (8) zum Extrudieren der Schlauchfolie, und
einen Kühlring (2) nach einem der vorangehenden Ansprüche, der zwischen der Extrusionsringdüse (8) des Folienblaskopfs (7) und einer Einfriergrenze (12) der extrudierten Schlauchfolie (11) angeordnet ist und der mit seiner Kontaktfläche (22) in unmittelbarem Kontakt zur Schlauchfolie (11) angeordnet ist.

19. Verfahren zur Außenkühlung einer Schlauchfolie (11) aus thermoplastischem Kunststoff, bei dem
ein Kühlring (2) gemäß einem der Ansprüche 1-17 zwischen einer Extrusionsringdüse (8) eines Folienblaskopfs (7) eines Blasfolienextruders und einer Einfriergrenze (12) der extrudierten Schlauchfolie (11) angeordnet wird,
Kühlgas mittels zumindest eines Kühlgasrings (25, 26) des Kühlrings (2) mit zumindest einer zur Schlauchfolie (11) hin offenen Ringdüse (29, 30, 37) gegen die Schlauchfolie (11) ausgeblasen wird und
der Kühlring (2) mit zumindest einem Kontaktkühlring (21) mit einer Kontaktfläche (22) in unmittelbarem Kontakt zum Folienschlauch (11) angeordnet wird,
**dadurch gekennzeichnet,**
**dass** die Oberflächentemperatur der Kontaktfläche (22) in Abhängigkeit einer der Prozessparameter aus der Gruppe Ausstoßleistung, Dicke der Schlauchfolie hinter der Einfriergrenze und Folienbreite eingestellt wird.

20. Verfahren nach Anspruch 19,
**dadurch gekennzeichnet,**
**dass** die Oberflächentemperatur der Kontaktfläche (22) in Abhängigkeit von
- einer Temperatur der Schlauchfolie (11) vor Eintritt in den Kontaktkühlring (21) oder
- einer Temperatur der Schlauchfolie (11) nach Austritt aus dem Kontaktkühlring (21) oder
- einer Temperaturdifferenz zwischen der Temperatur der Schlauchfolie (11) vor Eintritt in den Kontaktkühlring (21) und der Temperatur der Schlauchfolie (11) nach dem Austritt aus dem Kontaktkühlring (21)
gesteuert wird.

21. Verfahren nach einem der Ansprüche 19 oder 20,
**dadurch gekennzeichnet,**
**dass** die gesamte Kontaktfläche (22) auf eine Basistemperatur temperiert wird und in Abhängigkeit des Dickenquerprofils der Schlauchfolie (11) die Oberflächentemperatur der Kontaktfläche (22) über den Umfang sektorweise abweichend von der Basistemperatur nachgeregelt wird.

22. Verfahren nach einem der Ansprüche 19 bis 21,
**dadurch gekennzeichnet,**
**dass** Kühlgasströme in Abhängigkeit des Dickenquerprofils der Schlauchfolie (11) über dem Umfang sektorweise hinsichtlich des Volumenstroms und/oder der Temperatur variabel gesteuert werden.

## Claims

1. A cooling ring (2) for externally cooling a tubular film (11) of thermoplastic material, the cooling ring (2) comprising:
at least one cooling gas ring (25, 26) with at least one annular nozzle (29, 30, 37) open towards the tubular film (11) for blowing out cooling gas against the tubular film (11), and
at least one contact cooling ring (21) which has a contact surface (22) which is to be arranged in direct contact with the tubular film (11), a temperature control device (23, 24) being provided which extends over the circumference of the contact cooling ring (21) and by means of which the surface temperature of the contact surface (22) can be adjusted,
**characterized in**
**that** the at least one cooling gas ring (25, 26) and the at least one contact cooling ring (21) are combined to form a common structural unit, and
**that** the cooling ring has an adjusting mechanism (20) with which the distance of the cooling ring (2) from a film blowing head (7) can be adjusted.

2. Cooling ring according to claim 1,
**characterized in**
**that** the at least one cooling gas ring (25, 26) and the at least one contact cooling ring (21) are arranged in a common housing.

3. Cooling ring according to one of the preceding claims,
**characterized in**
**that** the at least one annular nozzle (30) is formed by lips (43, 44) of two annular elements (40, 41), and
**that** the contact cooling ring is integrated in one of the two annular elements (40).

4. Cooling ring according to one of the preceding claims,
**characterized in**
**that** the temperature control device (23, 24) extending over the circumference of the contact cooling ring (21) is designed in such a way that the surface temperature of the contact surface (22) can be adjusted sector by sector over its circumference.

5. Cooling ring according to one of the preceding claims,
**characterized in**
**that** the temperature control device comprises a cooling channel system (23) which is designed such that a cooling medium can be passed through the cooling channel system (23).

6. Cooling ring according to claim 5,
**characterized in**
**that** the cooling channel system (23) is divided into individual sector cooling channels over the circumference of the contact cooling ring (21).

7. Cooling ring according to one of the preceding claims,
**characterized in**
**that** a plurality of controllable electrical temperature control elements (24) are arranged distributed in sectors over the circumference of the contact cooling ring (21).

8. Cooling ring according to one of the preceding claims,
**characterized in**
**that** the contact surface (22) is designed as a circumferential inner surface of the contact cooling ring (21) and the contact cooling ring (21) is intended to enclose the tubular film (11).

9. Cooling ring according to one of the preceding claims,
**characterized in**
**that** at least one annular nozzle (29, 30) is arranged downstream of the contact cooling ring (21) in the production direction (P) and/or at least one annular nozzle (29, 37) is arranged upstream of the contact cooling ring (21) in the production direction (P).

10. Cooling ring according to one of the preceding claims,
**characterized in**
**that** at least one annular nozzle (29, 30) is provided which is directed in the production direction (P) and is preferably arranged downstream of the contact cooling ring (21) in the production direction (P), and
**that** at least one annular nozzle (29, 37) is provided which is directed counter to the production direction and is preferably arranged upstream of the contact cooling ring (21) in the production direction (P).

11. Cooling ring according to one of the preceding claims,
**characterized in**
**that** all the annular nozzles (29, 30) of a cooling gas ring (25) are fed from a common annular chamber (27) for distributing cooling gas.

12. Cooling ring according to one of the preceding claims,
**characterized in**
**that** at least one of the cooling gas rings (25) has means (47, 51) with which the volumetric flow and/or the temperature of the cooling gas can be variably controlled over the circumference sector by sector.

13. Cooling ring according to one of the preceding claims,
**characterized in**
**that** a plurality of contact cooling rings (21) are provided, the temperature control devices of which can be controlled individually and independently of one another.

14. Cooling ring according to one of the preceding claims,
**characterized in**
**that** the contact cooling ring (21) and the at least one cooling gas ring (25) are connected to one another via an adjusting mechanism (53), and the distance between the contact cooling ring (21) and the at least one cooling gas ring (25) can be adjusted by means of the adjusting mechanism (53).

15. Cooling ring according to one of the preceding claims,
**characterized in**
**that** the contact cooling ring (21) is divided, at least in the circumferential direction, into a plurality of contact cooling ring segments (21.1, 21.2) which are arranged in particular on a plurality of planes (54, 55).

16. Cooling ring according to claim 15,
**characterized in**
**that** the contact cooling ring segments (21.1, 21.2) are each radially adjustable relative to the tubular film (11) by means of a radial adjustment mechanism (57).

17. Cooling ring according to one of claims 15 to 16,
**characterized in**
**that** the contact cooling ring segments (21.1, 21.2) can each be tempered sector by sector in the circumferential direction.

18. A film blowing apparatus for producing a tubular film (11) of thermoplastic resin comprising:
a film blowing head (7) with an extrusion ring die (8) for extruding the tubular film, and
a cooling ring (2) according to any one of the preceding claims, which is arranged between the extrusion ring nozzle (8) of the film blowing head (7) and a frost line (12) of the extruded tubular film (11) and which is arranged with its contact surface (22) in direct contact with the tubular film (11).

19. Method for the external cooling of a tubular film (11) made of thermoplastic material, wherein
a cooling ring (2) according to any one of claims 1-17 is arranged between an extrusion ring die (8) of a film blowing head (7) of a blown film extruder and a frost line (12) of the extruded tubular film (11),
cooling gas is blown out against the tubular film (11) by means of at least one cooling gas ring (25, 26) of the cooling ring (2) with at least one annular nozzle (29, 30, 37) open towards the tubular film (11), and
the cooling ring (2) is arranged with at least one contact cooling ring (21) with a contact surface (22) in direct contact with the film tube (11),
**characterized in**
**that** the surface temperature of the contact surface (22) is set as a function of one of the process parameters from the group consisting of output rate, thickness of the tubular film behind the frost line and film width.

20. Method according to claim 19,
**characterized in**
**that** the surface temperature of the contact surface (22) is controlled dependent on
- a temperature of the tubular film (11) before it enters the contact cooling ring (21) or
- a temperature of the tubular film (11) after it has left the contact cooling ring (21) or
- a temperature difference between the temperature of the tubular film (11) before entering the contact cooling ring (21) and the temperature of the tubular film (11) after exiting the contact cooling ring (21).

21. Method according to one of the claims 19 or 20,
**characterized in**
**that** the entire contact surface (22) is tempered to a base temperature and, as a function of the transverse thickness profile of the tubular film (11), the surface temperature of the contact surface (22) is readjusted over the circumference in sectors deviating from the base temperature.

22. Method according to any one of claims 19 to 21,
**characterized in**
**that** cooling gas flows are controlled variably with respect to the volume flow and/or the temperature as a function of the thickness transverse profile of the tubular film (11) over the circumference sector by sector.

## Revendications

1. Anneau de refroidissement (2) pour le refroidissement externe d'une feuille tubulaire (11) en matière thermoplastique, dans lequel l'anneau de refroidissement (2) présente :
au moins un anneau de gaz de refroidissement (25, 26) avec au moins une buse annulaire (29, 30, 37) ouverte vers la feuille tubulaire (11) pour souffler du gaz de refroidissement contre la feuille tubulaire (11), et au moins un anneau de refroidissement de contact (21) qui présente une surface de contact (22) devant être disposée en contact direct avec la feuille tubulaire (11), dans lequel un dispositif de thermorégulation (23, 24) s'étendant sur la circonférence de l'anneau de refroidissement de contact (21) est prévu, au moyen duquel la température de surface de la surface de contact (22) est réglable,
**caractérisé en ce**
**que** l'au moins un anneau de gaz de refroidissement (25, 26) et l'au moins un anneau de refroidissement de contact (21) sont combinés en une unité structurelle commune et
**que** l'anneau de refroidissement présente un mécanisme de réglage (20) avec lequel la distance entre l'anneau de refroidissement (2) et une tête de soufflage de feuille (7) est réglable.

2. Anneau de refroidissement selon la revendication 1, **caractérisé en ce**
**que** l'au moins un anneau de gaz de refroidissement (25, 26) et l'au moins un anneau de refroidissement de contact (21) sont disposés dans un boîtier commun.

3. Anneau de refroidissement selon l'une des revendications précédentes, **caractérisé en ce que** l'au moins une buse annulaire (30) est formée par des lèvres (43, 44) de deux éléments annulaires (40, 41) et
que l'anneau de refroidissement de contact est intégré dans l'un des deux éléments annulaires (40).

4. Anneau de refroidissement selon l'une des revendications précédentes, **caractérisé en ce que** le dispositif de thermorégulation (23, 24) s'étendant sur la circonférence de l'anneau de refroidissement de contact (21) est réalisé de telle sorte que la température de surface de la surface de contact (22) est réglable par secteurs sur sa circonférence.

5. Anneau de refroidissement selon l'une des revendications précédentes, **caractérisé en ce que** le dispositif de thermorégulation comprend un système de canaux de refroidissement (23) réalisé de manière à pouvoir faire circuler un milieu de refroidissement à travers le système de canaux de refroidissement (23).

6. Anneau de refroidissement selon la revendication 5, **caractérisé en ce**
**que** le système de canaux de refroidissement (23) est partagé, par secteurs, sur la circonférence de l'anneau de refroidissement de contact (21), en canaux de refroidissement sectoriels individuels.

7. Anneau de refroidissement selon l'une des revendications précédentes, **caractérisé en ce que** plusieurs éléments de thermorégulation électriques réglables (24) sont disposés de manière répartie par secteurs sur la circonférence de l'anneau de refroidissement de contact (21).

8. Anneau de refroidissement selon l'une des revendications précédentes, **caractérisé en ce que** la surface de contact (22) est réalisée en tant que surface intérieure circonférentielle de l'anneau de refroidissement de contact (21) et que l'anneau de refroidissement de contact (21) est destiné à entourer la feuille tubulaire (11).

9. Anneau de refroidissement selon l'une des revendications précédentes, **caractérisé en ce qu'**au moins une buse annulaire (29, 30) est disposée dans le sens de fabrication (P) derrière l'anneau de refroidissement de contact (21) et/ou qu'au moins une buse annulaire (29, 37) est disposée dans le sens de fabrication (P) devant l'anneau de refroidissement de contact (21).

10. Anneau de refroidissement selon l'une des revendications précédentes, **caractérisé en ce qu'**au moins une buse annulaire (29, 30) est prévue, laquelle est orientée dans le sens de fabrication (P) et est de préférence disposée dans le sens de fabrication (P) derrière l'anneau de refroidissement de contact (21), et
qu'au moins une buse annulaire (29, 37) est prévue, laquelle est orientée en opposition au sens de fabrication et est de préférence disposée dans le sens de fabrication (P) devant l'anneau de refroidissement de contact (21).

11. Anneau de refroidissement selon l'une des revendications précédentes, **caractérisé en ce que** l'ensemble des buses annulaires (29, 30) d'un anneau de gaz de refroidissement (25) est alimenté par une chambre annulaire (27) commune pour la répartition du gaz de refroidissement.

12. Anneau de refroidissement selon l'une des revendications précédentes, **caractérisé en ce qu'**au moins l'un des anneaux de gaz de refroidissement (25) présente des moyens (47, 51) avec lesquels le flux volumique et/ou la température du gaz de refroidissement peuvent être commandés de façon variable, par secteurs, sur la circonférence.

13. Anneau de refroidissement selon l'une des revendications précédentes, **caractérisé en ce que** plusieurs anneaux de refroidissement de contact (21) sont prévus, dont les dispositifs de thermorégulation peuvent être commandés individuellement et indépendamment les uns des autres.

14. Anneau de refroidissement selon l'une des revendications précédentes, **caractérisé en ce que** l'anneau de refroidissement de contact (21) et l'au moins un anneau de gaz de refroidissement (25) sont reliés ensemble via un mécanisme de réglage (53) et que la distance entre l'anneau de refroidissement de contact (21) et l'au moins un anneau de gaz de refroidissement (25) est réglable au moyen du mécanisme de réglage (53).

15. Anneau de refroidissement selon l'une des revendications précédentes, **caractérisé en ce que** l'anneau de refroidissement de contact (21) est partagé, au moins en direction circonférentielle, en plusieurs segments d'anneau de refroidissement de contact (21.1, 21.2), lesquels sont en particulier disposés sur plusieurs plans (54, 55).

16. Anneau de refroidissement selon la revendication 15, **caractérisé en ce**
**que** les segments d'anneau de refroidissement de contact (21.1, 21.2) sont réglables radialement, respectivement au moyen d'un mécanisme de réglage radial (57), par rapport à la feuille tubulaire (11).

17. Anneau de refroidissement selon l'une des revendications 15 ou 16, **caractérisé en ce que** les segments d'anneau de refroidissement de contact (21.1, 21.2) peuvent être respectivement thermorégulés par secteurs en direction circonférentielle.

18. Installation de soufflage de feuille pour la fabrication d'une feuille tubulaire (11) en matière thermoplastique, comprenant :
une tête de soufflage de feuille (7) avec une buse annulaire d'extrusion (8) pour l'extrusion de la feuille tubulaire, et
un anneau de refroidissement (2) selon l'une des revendications précédentes, lequel est disposé entre la buse annulaire d'extrusion (8) de la tête de soufflage de feuille (7) et une limite de transition vitreuse (12) de la feuille tubulaire (11) extrudée et lequel est disposé avec sa surface de contact (22) en contact direct avec la feuille tubulaire (11).

19. Procédé pour le refroidissement externe d'une feuille tubulaire (11) en matière thermoplastique, dans lequel un anneau de refroidissement (2) selon l'une des revendications 1-17 est disposé entre une buse annulaire d'extrusion (8) d'une tête de soufflage de feuille (7) d'une extrudeuse de feuille soufflée et une limite de transition vitreuse (12) de la feuille tubulaire (11) extrudée,
du gaz de refroidissement est soufflé, au moyen d'au moins un anneau de gaz de refroidissement (25, 26) de l'anneau de refroidissement (2) avec au moins une buse annulaire (29, 30, 37) ouverte vers la feuille tubulaire (11), contre la feuille tubulaire (11), et l'anneau de refroidissement (2) est disposé avec au moins un anneau de refroidissement de contact (21) avec une surface de contact (22) en contact direct avec la feuille tubulaire (11),
**caractérisé en ce**
**que** la température de surface de la surface de contact (22) est réglée en fonction d'un paramètre de traitement du groupe : performance d'éjection, épaisseur de la feuille tubulaire après la limite de transition vitreuse, et largeur de la feuille.

20. Procédé selon la revendication 19, **caractérisé en ce que** la température de surface de la surface de contact (22) est commandée en fonction
- d'une température de la feuille tubulaire (11) avant l'entrée dans l'anneau de refroidissement de contact (21) ou
- d'une température de la feuille tubulaire (11) après la sortie de l'anneau de refroidissement de contact (21) ou
- d'une différence de température entre la température de la feuille tubulaire (11) avant l'entrée dans l'anneau de refroidissement de contact (21) et la température de la feuille tubulaire (11) après la sortie de l'anneau de refroidissement de contact (21).

21. Procédé selon l'une des revendications 19 ou 20, **caractérisé en ce**
**que** l'ensemble de la surface de contact (22) est thermorégulé à une température de base et qu'en fonction du profil transversal en épaisseur de la feuille tubulaire (11), la température de surface de la surface de contact (22) fait l'objet d'un réglage ultérieur sur la circonférence, par secteurs, de façon divergente à la température de base.

22. Procédé selon l'une des revendications 19 à 21, **caractérisé en ce**
**que** des flux de gaz de refroidissement sont commandés de façon variable en fonction du profil transversal en épaisseur de la feuille tubulaire (11), sur la circonférence, par secteurs, concernant le flux volumique et/ou la température.
